# FASCICULE DE BREVET EUROPEEN

(11) **EP 4 594 869 B1**
(45) Date de publication et mention de la délivrance du brevet: **08.07.2026**
(21) Numéro de dépôt: 23787167.8
(22) Date de dépôt: 25.09.2023
(51) Int. Cl.: G06F 9/451, G06F 21/71, G06F 21/85, G06Q 20/06, G06Q 20/32, G06Q 20/36

(54) **TERMINAL CONNECTÉ COMPRENANT DES MOYENS POUR INCRUSTER UNE IMAGE SÉCURISÉE DANS UNE IMAGE NON SÉCURISÉE**
VERBUNDENES TERMINAL MIT MITTELN ZUM EINBETTEN EINES SICHEREN BILDES IN EIN NICHT SICHERES BILD
CONNECTED TERMINAL COMPRISING MEANS FOR EMBEDDING A SECURE IMAGE IN A NON-SECURE IMAGE

(30) Priorité: 30.09.2022 FR 2209987; 30.09.2022 FR 2209984; 29.11.2022 FR 2212475; 17.05.2023 FR 2304933
(43) Date de publication de la demande: 06.08.2025
(73) Titulaire: LEDGER, 75003 Paris (FR)
(72) Inventeur: HAMEAU, Patrice, Emmanuel, Denis, 92340 Bourg-la-Reine (FR); KALUZA, Christian, 38210 Tullins (FR); MEUDIC, Kevin, 92000 Asnieres sur Seine (FR); CHARRAT, Bruno, 13090 Aix en Provence (FR)
(74) Mandataire: Marchand, André
(86) Numéro de dépôt international: PCT/FR2023/051473
(87) Numéro de publication internationale: WO 2024/069090

(56) Documents cités:
- WO-A1-03/003170
- US-A1- 2011 199 308
- US-A1- 2019 057 212
- US-A1- 2019 138 702
- US-A1- 2021 166 227

## Description

Terminal connecté comprenant des moyens pour incruster une image sécurisée dans une image non sécurisée.

### Domaine technique

La présente invention concerne l'intégration d'une fonction sécurisée dans un terminal connecté tel un smartphone, et notamment l'intégration d'une fonction de portefeuille matériel de cryptoactifs. La présente invention concerne également le contrôle d'informations présentées à un utilisateur sur un écran du terminal pendant la réalisation d'une opération sécurisée.

### Arrière-plan

Ces dernières années, le développement des cryptomonnaies ou autres types de cryptoactifs gérés par la blockchain, tels que les jetons non fongibles (« NFT ») et les contrats intelligents ("Smart Contracts"), a donné naissance à divers moyens de stockage et de conservation des clés privées attachées à ces différents types de cryptoactifs. C'est ainsi que sont apparues les notions de "portefeuille", de "stockage à froid" et de stockage "à chaud" de clés privées. Un "portefeuille", appelé aussi "porte-monnaie", est un appareil ou un programme dont la fonction est de gérer des cryptoactifs, et donc de stocker les clés privées qui y sont attachées. Les portefeuilles dits "chauds" ("hot wallets") sont connectés à Internet et susceptibles d'attaques de pirates ou d'exposition à des virus et malwares. Il peut s'agir de portefeuilles gérés par des plateformes d'échange centralisé, qui n'offrent pas le plus haut niveau de sécurité. Les portefeuilles "chauds" peuvent aussi prendre la forme de programmes installés sur des téléphones mobiles, tablettes ou ordinateurs personnels ("software wallets"). De tels portefeuilles sont en permanence connectés à Internet et intègrent de nombreuses applications non sécurisées, donc eux-mêmes susceptibles d'attaques.

Les portefeuilles froids ("cold wallets") constituent la solution la plus sûre pour le stockage à froid ("cold storage") de clés privées, c'est-à-dire hors de tout accès direct à Internet, ce qui réduit la surface d'attaque et donc le risque de vol par piratage informatique. Les transactions mettant en jeu des clés privées sont signées dans un environnement hors ligne. Toute transaction initiée en ligne est temporairement transférée vers le portefeuille matériel hors ligne, où elle est ensuite signée numériquement avant d'être transmise au réseau en ligne. Comme la clé privée n'est pas communiquée au serveur en ligne pendant le processus de signature, un pirate informatique ne peut pas y accéder.

Les portefeuilles ou portes-monnaies matériels appelés "hardware wallets" constituent une alternative pratique aux portefeuilles passifs pour stocker des clés privées. De plus, ils sont généralement configurés pour générer des phrases de récupération ("recovery phrases") permettant de restaurer les clés privées s'ils sont perdus. Rappelons que les cryptoactifs ne sont jamais stockés dans un portefeuille matériel, mais se trouvent enregistrés sur la blockchain. Un portefeuille matériel ne fait que stocker les clés privées permettant de gérer les transactions sur la blockchain. Les clés publiques correspondant aux clés privées pointent vers une adresse sur la blockchain où se trouvent réellement les actifs.

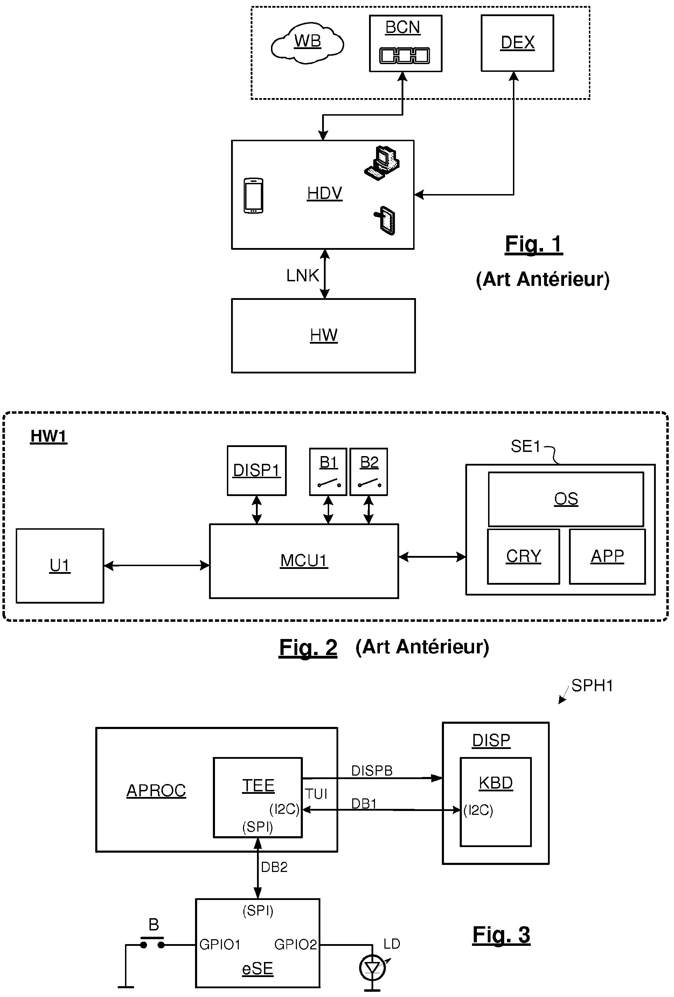

Comme montré sur la figure 1, un portefeuille matériel HW n'est jamais directement connecté à Internet. Pour être utilisable, le portefeuille matériel HW doit être relié à un dispositif hôte HDV au moyen d'une liaison de données LNK, par exemple USB ou Bluetooth. Le dispositif hôte HDV peut être un ordinateur, un téléphone mobile ou une tablette, et exécute un logiciel dit "compagnon" permettant de conduire des transactions sur la blockchain BCN, tel que le logiciel "Ledger Live" développé par la demanderesse. Alternativement, le portefeuille matériel HW peut être utilisé, par l'intermédiaire du dispositif hôte HDV avec des plateformes d'échange décentralisées ou "DEX", sur lesquelles l'utilisateur peut réaliser des transactions tout en conservant ses clés dans le portefeuille matériel.

Les portefeuilles matériels commercialisés par la demanderesse ont connu un important succès commercial en raison du haut degré de sécurité qu'ils offrent, grâce à l'utilisation d'un élément sécurisé ou "secure element" pour conserver les clés privées et signer les transactions. Un élément sécurisé est une plate-forme matérielle capable de stocker et de manipuler des données en conformité avec les règles et les exigences de sécurité fixées par une autorité de confiance. Il se présente sous la forme d'une puce de semi-conducteur mettant en œuvre diverses contre-mesures visant à contrer des attaques de fraudeurs.

La figure 2 montre l'architecture d'un portefeuille matériel HW1 du type commercialisé par la demanderesse sous l'appellation "Nano S". Le portefeuille matériel HW1 comporte un élément sécurisé SE1 associé à un microcontrôleur MCU1. Le microcontrôleur MCU1 comporte une interface USB U1 et agit comme un dispositif mandataire (proxy) à l'égard de l'élément sécurisé SE1, pour la communication avec un dispositif hôte externe HDV exécutant un logiciel compagnon (Cf. Fig. 1). L'élément sécurisé SE1 possède son propre système d'exploitation OS sécurisé (micrologiciel) lui permettant d'exécuter des programmes APP, et intègre un coprocesseur cryptographique CRY. Le portefeuille matériel HW1 comporte également un afficheur DISP1 et deux boutons B1, B2 gérés par le microcontrôleur MCU1. L'utilisateur doit appuyer en même temps sur les deux boutons afin de manifester son accord ou consentement pour la réalisation ou la finalisation de ces opérations.

Les portefeuilles matériels du type qui vient d'être décrit sont dépourvus de connectivité Internet et doivent être couplés à un dispositif hôte comme un terminal mobile ou smartphone au moment d'effectuer une transaction. Ils offrent un haut degré de sécurité du fait qu'ils sont la plupart du temps inaccessibles via les réseaux publics et donc peu exposés aux attaques. Cependant, cette caractéristique les rend peu ergonomiques et susceptibles d'égarement ou d'oubli.

On a ainsi proposé des smartphones dits "blockchain" qui, tout en offrant les fonctionnalités habituelles d'un téléphone mobile, intègrent une fonctionnalité de portefeuille matériel de cryptomonnaies. tels le modèle Galaxy S10 de Samsung^{®}, le modèle Exodus 1 de HTC^{®}, ou le modèle Finney de Sirin Labs^{®}. De tels smartphones sont communément appelés "smartphones blockchain" ou "crypto-smartphones". A l'instar des portefeuilles matériels, de tels smartphones sont équipés d'un élément sécurisé embarqué et d'un espace de stockage interne inaccessible par l'Internet, permettant de constituer un portefeuille de cryptomonnaies. Dans d'autres réalisations, le processeur principal dispose d'une enclave sécurisée ou environnement d'exécution de confiance TEE ("Trusted Execution Environment") en lieu et place de l'élément sécurisé.

Malgré ces précautions, la mise en œuvre d'un portefeuille matériel à l'intérieur d'un smartphone augmente inévitablement l'exposition du portefeuille aux attaques par Internet, et n'offre pas les mêmes avantages en termes de sécurité qu'un véritable portefeuille froid. Par ailleurs, il n'est pas possible pour l'utilisateur de savoir de façon sûre si des données affichées sont fiables, car elles pourraient être fournies par un programme malveillant.

En matière de cryptomonnaie, il est requis un degré de sécurité très élevé. Les smartphones blockchain offrent un certain degré de sécurité par l'utilisation d'une enclave sécurisée ou environnement d'exécution de confiance TEE ("Trusted Execution Environment"), mais la fonction de portefeuille matériel numérique, qui n'est pas la première fonction d'un tel téléphone, exige davantage. En effet, la mise en œuvre d'un portefeuille matériel à l'intérieur d'un smartphone supprime en partie les avantages en termes de sécurité d'un portefeuille matériel détaché que l'on connecte seulement en cas de besoin. Cela augmente inévitablement l'exposition du portefeuille aux attaques par Internet.

Il existe donc un besoin de prévoir un dispositif électronique portatif connecté à l'Internet permettant la réalisation d'une transaction sur la blockchain et notamment capable d'exécuter une application conçue pour réaliser des transactions sur la blockchain, telle que l'application Ledger Live ou équivalent, tout en offrant un degré de sécurité élevé en ce qui concerne la conservation des clés secrètes des comptes de cryptoactifs utilisées pour la signature des transactions.

Le document WO2015124088A1 décrit un terminal mobile comprenant un système de transaction sécurisé équipé d'une unité d'affichage sécurisée et d'un bouton de confirmation physique, de sorte que lorsque le terminal mobile affiche des informations sensibles dans le processus de transaction électronique, les informations sensibles sont affichées séparément sur l'unité d'affichage sécurisée. Un bouton de confirmation physique séparé est utilisé comme unité d'un élément sécurisé, de sorte que les données de transaction clés peuvent être réalisées via l'élément sécurisé et son unité d'affichage sécurisée et son bouton de confirmation physique sans passer par le système d'exploitation général dans le terminal mobile.

Le document WO2015180581 enseigne un partage d'affichage entre une puce principale et une puce de sécurité au moyen d'un module de commutation piloté par un bouton (Fig. 3). Le module de commutation reçoit des données à afficher et les applique à un pilote d'affichage qui commande un écran d'affichage. Dans une telle architecture mixte dans laquelle plusieurs processeurs se partagent l'accès à un écran d'affichage, le pilote d'affichage agencé en sortie du module de commutation est susceptible de faire l'objet d'attaques visant le contrôle de l'affichage. De plus, en pratique chaque processeur doit pouvoir adresser au pilote d'affichage des signaux de contrôle, nécessitant la prévision de liaisons matérielles telles des pistes conductrices. De telles liaisons matérielles augmentent la surface d'attaque (appelée également surface d'exposition) de l'architecture mixte et notamment la surface d'attaque de la puce de sécurité.

Le document EP 2 836 968 B1 décrit un dispositif de transaction comprenant un écran, un processeur non sécurisé, un processeur sécurisé comprenant un processeur d'image, et un mélangeur interposé entre d'une part l'écran et d'autre part le processeur non sécurisé et le processeur d'image du processeur sécurisé. Le mélangeur est contrôlé par le processeur sécurisé et permet, dans un mode de fonctionnement sécurisé du dispositif, de sélectionner des images fournies par le processeur sécurisé pour s'assurer que le système d'exploitation du processeur non sécurisé n'a plus le contrôle de l'écran.

Le document "Trusted display and input using screen overlays", 2017 International Conference on Reconfigurable Computing and FPGAS (RECONFIG), IEEE, pages 1-6, DOI: 10.1109/RECONFIG.2017.8279826, de BRANDON ANTHONY ET AL., 04 décembre 2017, décrit un dispositif comprenant un écran, un processeur non sécurisé, un processeur sécurisé, et un circuit FPGA interposé entre d'une part l'écran et d'autre part le processeur non sécurisé et le processeur sécurisé. Le circuit FPGA est contrôlé par le processeur sécurisé et permet, dans un mode de fonctionnement sécurisé du dispositif, de sélectionner des images fournies par le processeur sécurisé pour s'assurer que le processeur non sécurisé n'a plus le contrôle de l'écran.

Le document US 2011/0199308 A1 décrit un dispositif comprenant un processeur non sécurisé, un processeur sécurisé, un multiplexeur commandé par le processeur sécurisé de manière à afficher, dans un mode non sécurisé, ou mode « pass-through », des images fournies par le processeur non sécurisé, et, dans un mode sécurisé, afficher des images fournies par le processeur non sécurisé mais ayant été préalablement stockées dans une mémoire et vérifiées par le processeur sécurisé, ou des images générées localement par le processeur sécurisé.

Le document US 2019/057212 A1 décrit un procédé d'utilisation du contenu d'affichage d'un environnement de système d'exploitation comme image d'arrière-plan dans une interface utilisateur sécurisée générée par une application sécurisée qui est exécutée dans un environnement d'exécution sécurisé TEE.

Il existe donc également un besoin d'améliorer la sécurité des architectures mixtes dans lesquelles plusieurs processeurs se partagent l'accès à un écran d'affichage.

Il existe également un besoin de pouvoir intégrer un portefeuille matériel dans une plateforme de terminal mobile classique pour la transformer en un terminal mobile avec portefeuille matériel embarqué, avec un minimum de modifications de la plateforme de terminal mobile.

### Résumé

L'invention est spécifiée par les revendications indépendantes annexées. En outre, des modes de réalisation préférés sont définis par les revendications dépendantes.

Des modes de réalisations concernent un terminal connecté configuré pour exécuter une opération sécurisée, le terminal comprenant un processeur d'application configuré pour initier l'opération sécurisée, un élément sécurisé pour exécuter l'opération sécurisée, et un afficheur accessible par l'intermédiaire d'un bus câblé et recevant du processeur d'application des données d'image à afficher à l'attention d'un utilisateur, le terminal comprenant des moyens contrôlés par l'élément sécurisé et configurés pour, à la demande de l'élément sécurisé et au moins pendant l'exécution de l'opération sécurisée, appliquer alternativement sur le bus câblé de l'afficheur des données d'image fournies par le processeur d'application et des données d'image fournies par l'élément sécurisé, de manière à ce que les données d'image fournies par l'élément sécurisé remplacent des données d'image fournies par le processeur d'application et forment une image sécurisée incrustée dans une image non sécurisée fournie par le processeur d'application, l'image sécurisée s'étendant dans au moins une région déterminée de l'afficheur.

Selon un mode de réalisation, le terminal comprend au moins un indicateur lumineux activé par l'élément sécurisé lorsque l'élément sécurisé incruste une image sécurisée dans une image non sécurisée fournie par le processeur d'application.

Selon un mode de réalisation, le terminal comprend des moyens pour indiquer à l'utilisateur l'emplacement et l'étendue de la région dans laquelle est affichée l'image sécurisée incrustée.

Selon un mode de réalisation, les moyens pour indiquer l'emplacement et l'étendue de la région dans laquelle est affichée l'image sécurisée incrustée comprennent une rangée d'indicateurs lumineux contrôlée par l'élément sécurisé et agencée en bordure de l'afficheur.

Selon un mode de réalisation, les moyens pour indiquer l'emplacement, de la région dans laquelle est affichée l'image sécurisée incrustée comprennent une région de l'afficheur qui est en permanence sous le contrôle de l'élément sécurisé, et qui affiche une apparence déterminée, et une bordure de la région dans laquelle est affichée l'image sécurisée incrustée, qui présente la même apparence que la région de l'afficheur qui est en permanence sous le contrôle de l'élément sécurisé.

Selon un mode de réalisation, les moyens configurés pour appliquer alternativement sur le bus câblé de l'afficheur des données d'image fournies par le processeur d'application et des données d'image fournies par l'élément sécurisé, comprennent un multiplexeur recevant sur une première entrée les données d'image fournies par le processeur d'application et sur une seconde entrée les données d'image fournies par l'élément sécurisé, un circuit de commande du multiplexeur, configuré pour commander le multiplexeur en fonction d'une donnée de configuration fournie par l'élément sécurisé.

Selon un mode de réalisation, le circuit de commande est configuré pour commander le multiplexeur avec une finesse d'incrustation déterminée des données d'image fournies par l'élément sécurisé, ladite finesse d'incrustation étant à l'échelle d'une ligne ou à l'échelle d'un pixel des données d'image fournies par le processeur d'application.

Selon un mode de réalisation, l'élément sécurisé est configuré pour, avant de réaliser l'opération, incruster dans une image non sécurisée fournie par le processeur d'application une image sécurisée comprenant des informations sur l'opération sécurisée.

Selon un mode de réalisation, le terminal comprend en outre un dispositif de saisie fournissant des données tactiles sur un bus de données, et un démultiplexeur commandé par l'élément sécurisé et configuré pour relier le bus de données du dispositif de saisie à un bus du processeur d'application ou à un bus de l'élément sécurisé.

Selon un mode de réalisation, l'élément sécurisé est configuré pour se relier au dispositif de saisie pendant l'affichage d'informations sur l'opération dans l'image sécurisée.

Selon un mode de réalisation, le terminal comprend un bouton physique actionnable par l'utilisateur et surveillé par l'élément sécurisé, dans lequel l'élément sécurisé est configuré pour ne pas réaliser l'opération en l'absence d'une action de l'utilisateur sur le bouton physique.

Selon un mode de réalisation, l'élément sécurisé et les moyens pour appliquer alternativement sur le bus câblé de l'afficheur des données d'image fournies par le processeur d'application et des données d'image fournies par l'élément sécurisé, sont intégrés en tout ou en partie dans un système-en-boîtier ou dans un système-sur-puce monté sur un support d'interconnexion du terminal.

Selon un mode de réalisation, l'opération secrète comprend une étape de signature d'une donnée au moyen d'une clé secrète.

Selon un mode de réalisation, le terminal ne comprend aucun contrôleur d'affichage entre l'afficheur et les moyens contrôlés par l'élément sécurisé, les données d'image appliquées alternativement sur le bus câblé de l'afficheur par les moyens contrôlés par l'élément sécurisé étant dans un format compatible avec l'afficheur et ne nécessitant pas, pour être affichées, d'être converties dans un autre format.

Des modes de réalisation concernent également un procédé pour conduire une opération sécurisée au moyen d'un terminal connecté, notamment la signature d'une donnée au moyen d'une clé secrète, le terminal comprenant un processeur d'application configuré pour initier l'opération sécurisée, un élément sécurisé détenant une clé privée et configuré pour exécuter l'opération sécurisée, et un afficheur accessible par l'intermédiaire d'un bus câblé et recevant du processeur d'application des images non sécurisées relatives au déroulement de l'opération sécurisée, le procédé comprenant une étape consistant à incruster, dans au moins une image non sécurisée fournie par le processeur d'application et présentée sur l'afficheur, une image sécurisée fournie par l'élément sécurisé et non accessible au processeur d'application, l'image sécurisée comprenant des informations sur l'opération et s'étendant dans au moins une région déterminée de l'afficheur, l'étape d'incrustation étant sous le contrôle de l'élément sécurisé et ne pouvant pas être empêchée ou corrompue par le processeur d'application.

Selon un mode de réalisation, le procédé comprend l'étape consistant à prévoir dans le terminal des moyens contrôlés par l'élément sécurisé et configurés pour, à la demande de l'élément sécurisé, appliquer alternativement sur le bus câblé de l'afficheur des données d'image fournies par le processeur d'application et des données d'image fournies par l'élément sécurisé, de manière à ce que les données d'image fournies par l'élément sécurisé remplacent des données d'image fournies par le processeur d'application et forment ladite image sécurisée incrustée dans l'image non sécurisée fournie par le processeur d'application.

Selon un mode de réalisation, on applique alternativement sur le bus câblé de l'afficheur des données d'image dans un format compatible avec l'afficheur et ne nécessitant pas, pour être affichées, d'être converties dans un autre format, et on ne prévoit aucun contrôleur d'affichage entre l'afficheur et les moyens contrôlés par l'élément sécurisé.

Selon un mode de réalisation, le procédé comprend la prévision dans le terminal d'au moins un indicateur lumineux, et comprenant une étape d'activation de l'indicateur lumineux par l'élément sécurisé lorsque l'élément sécurisé incruste une image sécurisée dans une image non sécurisée fournie par le processeur d'application.

Selon un mode de réalisation, le procédé comprend une étape consistant à indiquer à l'utilisateur l'emplacement et l'étendue de la région dans laquelle est affichée l'image sécurisée incrustée.

Selon un mode de réalisation, l'emplacement et l'étendue de la région dans laquelle est affichée l'image sécurisée incrustée sont indiqués au moyen d'une rangée d'indicateurs lumineux contrôlée par l'élément sécurisé et agencée en bordure de l'afficheur.

Selon un mode de réalisation, l'emplacement et l'étendue de la région dans laquelle est affichée l'image sécurisée incrustée sont indiqués au moyen d'une région de l'afficheur qui est en permanence sous le contrôle de l'élément sécurisé et qui présente une apparence déterminée, et d'une bordure de la région dans laquelle est affichée l'image sécurisée incrustée, qui présente la même apparence que la région de l'afficheur en permanence sous le contrôle de l'élément sécurisé.

Selon un mode de réalisation, le dispositif comprend un dispositif de saisie fournissant des données tactiles sur un bus de données, et le procédé comprend comprenant l'étape consistant à relier le dispositif de saisie à l'élément sécurisé pendant l'affichage d'informations sur l'opération sécurisée dans l'image sécurisée incrustée.

Selon un mode de réalisation, le dispositif comprend un bouton physique actionnable par l'utilisateur et surveillé par l'élément sécurisé, et le procédé comprend une étape consistant à configurer l'élément sécurisé de manière à ce qu'il n'exécute pas l'opération sécurisée en l'absence d'une action de l'utilisateur sur le bouton physique.

### Description sommaire des dessins

Des exemples d'architectures de terminaux connectés incluant un portefeuille matériel de cryptomonnaie seront décrits dans ce qui suit à titre non limitatif en relation avec les figures jointes parmi lesquelles :
- la figure 1 illustre des exemples classiques d'utilisation d'un portefeuille matériel par l'intermédiaire d'un dispositif hôte,
- la figure 2 montre une architecture classique de portefeuille matériel froid,
- la figure 3 montre un premier mode de réalisation d'un terminal connecté embarquant un portefeuille matériel,
- la figure 4 montre un deuxième mode de réalisation d'un terminal connecté embarquant un portefeuille matériel,
- la figure 5 montre un troisième mode de réalisation d'un terminal connecté embarquant un portefeuille matériel,
- la figure 6 montre un quatrième mode de réalisation d'un terminal connecté embarquant un portefeuille matériel,
- la figure 7 montre un cinquième mode de réalisation d'un terminal connecté embarquant un portefeuille matériel,
- la figure 8 montre un sixième mode de réalisation d'un terminal connecté embarquant un portefeuille matériel et comprenant un multiplexeur dynamique pour incruster une image sécurisée dans une image non sécurisée,
- la figure 9A, la figure 9B, la figure 9C, la figure 9D et la figure 9E montrent divers modes de réalisation d'un procédé d'incrustation d'une image sécurisée dans une image non sécurisée,
- la figure 10 montre un premier mode de réalisation du multiplexeur dynamique,
- la figure 11 montre un deuxième mode de réalisation du multiplexeur dynamique,
- la figure 12 montre un troisième mode de réalisation du multiplexeur dynamique,
- la figure 13 montre un quatrième mode de réalisation du multiplexeur dynamique,
- la figure 14 montre un cinquième mode de réalisation du multiplexeur dynamique,
- la figure 15 montre un sixième mode de réalisation du multiplexeur dynamique, et
- la figure 16 montre un agencement de composants d'un terminal mobile connecté selon l'un des modes de réalisation des figures 4 à 8, 10 à 14.

### Description détaillée

Dans ce qui suit seront décrites des architectures de terminal connecté incluant un portefeuille matériel embarqué et conçues pour éviter sinon limiter des attaques rendues possibles par une telle configuration. Pour ne pas créer un écosystème entièrement nouveau et ne pas nuire à l'expérience utilisateur, on recherche une compatibilité avec le matériel et les systèmes d'exploitation existants (Android, iOS), et à utiliser les voies traditionnelles de distribution des applications. Ainsi, il est supposé que le terminal connecté considéré est en mesure d'installer et exécuter des applications pouvant provenir de sources inconnues, voire douteuses, ce qui augmente le défi de la sécurisation des transactions avec le portefeuille matériel embarqué. Il est également supposé que des applications installables peuvent gagner un accès à des ressources matérielles intervenant lors d'une communication avec un élément sécurisé mettant en œuvre le portefeuille matériel.

Par exemple, un logiciel malveillant pourrait enregistrer des touches appuyées pour voler un code secret, simuler des touches appuyées pour fausser une transaction, modifier l'affichage pour tromper l'utilisateur sur la transaction qu'il est en train d'effectuer, etc.

Plus spécifiquement, la validation d'une transaction sur un téléphone par un clavier virtuel peut être interceptée par un logiciel espion de bas niveau ayant accès à l'interface de l'écran tactile en relevant les coordonnées des appuis sur la dalle tactile. Sans savoir ce qui est affiché, le logiciel espion peut se baser sur l'hypothèse que le clavier virtuel affiché est l'un des nombreux claviers traditionnels disponibles sur la plateforme, de sorte que les coordonnées des appuis révèlent les touches du clavier. Le logiciel espion peut également avoir accès aux accéléromètres ou autres capteurs habituellement présents dans un terminal mobile - les appuis sur différentes positions de la dalle se traduisent par des valeurs d'accélération différentes en rotation sur deux axes, de sorte que les positions des appuis peuvent être déduites.

Pour y remédier partiellement, les applications classiques affichent, pour la saisie des codes d'identification personnels, un clavier virtuel numérique avec des touches aléatoirement positionnées. Cependant, bien que cette mesure soit utile pour entraver la déduction d'un code d'identification, un logiciel malveillant pourrait déduire qu'une transaction est en cours et, avant que l'utilisateur n'ait terminé, modifier le montant ou le destinataire et simuler la validation de la transaction par l'utilisateur en modifiant les entrées de l'application sans modifier l'application elle-même.

La figure 3 représente un mode de réalisation SPH1 d'un terminal mobile ou autre dispositif connecté embarquant un portefeuille matériel. Le terminal mobile comprend un processeur d'application APROC relié à divers dispositifs périphériques, notamment un afficheur tactile incluant un afficheur DISP et une dalle tactile KBD. Le processeur d'application est par exemple un processeur en bande de base assurant des communications téléphoniques et comprenant une connectivité Internet. Le processeur gère l'afficheur par l'intermédiaire d'un bus DISPB mettant en œuvre un protocole d'interface vidéo déterminé, par exemple le protocole MIPI DSI ("Display Serial Interface"). Le protocole MIPI-DSI a été largement adopté par l'industrie et est actuellement omniprésent dans les smartphones. Il est également largement utilisé dans les tablettes, les ordinateurs portables et les hybrides ordinateur portable/tablette. Le processeur gère ici la dalle tactile KBD par une autre interface, par exemple un bus de données DB1 de type I2C. Pour des raisons de lisibilité du dessin, tous les éléments d'un terminal mobile ne sont pas représentés.

Le processeur d'application APROC intègre par ailleurs une enclave sécurisée ou un environnement d'exécution de confiance TEE ("Trusted Execution Environment"). Une telle enclave comprend généralement un processeur, une mémoire et un gestionnaire d'afficheur tactile (appelé également contrôleur d'affichage) dédiés. Elle est conçue pour mettre en œuvre une interface utilisateur de confiance TUI ("Trusted User Interface"), par exemple comme le préconise le document "Trusted User Interface API" de GlobalPlatform^{®} disponible à l'adresse suivante :
https://globalplatform.org/wp-content/uploads/2013/06/GlobalPlatform Trusted User Interface API v1.0.pdf

Ainsi, cette enclave peut, selon les instructions exécutées par l'application, gérer l'affichage DISP et la saisie sur la dalle tactile KBD, comme cela est représenté.

Le terminal mobile inclut également un élément sécurisé embarqué eSE mettant en œuvre un portefeuille matériel de cryptoactifs. L'élément eSE peut être semblable à celui intégré dans les portefeuilles matériels détachés exposés précédemment. Il peut s'agir du microcontrôleur sécurisé ST33 de STMicroelectronics^{®} qui possède, entre autres, une interface SPI sécurisée ("Serial Peripheral Interface"), deux interfaces I2C ("Inter-Integrated Circuit") et diverses broches d'entrée/sortie programmables GPIO. Le lien désigné par LNK à la figure 1 entre le terminal mobile HDV et le portefeuille matériel détaché HW, par exemple une interface USB ou Bluetooth, est ici réalisé par une liaison câblée permanente entre l'élément sécurisé eSE et le processeur d'application, ici un bus de données DB2. Le bus DB2 est par exemple un bus SPI relié à l'interface éponyme du microcontrôleur ST33. Pour assurer une meilleure sécurité de la communication, l'autre extrémité du bus DB2 peut être reliée à l'enclave TEE.

La réalisation de la fonction de portefeuille matériel dans l'élément eSE et les échanges entre l'élément eSE et le processeur d'application peuvent être en tout point similaires à ce qui est connu des figures 1 et 2 et ne seront pas décrites plus en détail.

Par ailleurs, une des broches d'entrée/sortie GPIO1 de l'élément sécurisé eSE est reliée à un bouton physique B prévu pour valider des transactions par une opération mécanique. La broche GPIO1 est exclusivement gérée par l'élément sécurisé et son changement d'état est impossible à simuler par un logiciel exécuté sur le processeur d'application. Une autre broche d'entrée/sortie GPIO2 de l'élément sécurisé eSE commande un indicateur lumineux LD formé ici par une diode LED pour signaler qu'une opération sécurisée est en cours avec le portefeuille matériel dans l'élément eSE. Le bouton B est un bouton physique dédié agencé, par exemple, sur une paroi latérale du terminal mobile, qui se distingue visuellement des autres boutons habituellement prévus sur le terminal mobile. L'indicateur lumineux LD est également dédié et ostensible par rapport aux autres indicateurs lumineux habituellement prévus sur le terminal mobile.

Avec cette configuration, une transaction est préparée de façon usuelle par une application officielle, comme "Ledger Live", exécutée par le processeur d'application. A partir du moment où l'utilisateur doit valider la transaction, l'application passe par l'enclave TEE pour afficher la transaction sur l'afficheur DISP et, le cas échéant, gérer une phase de saisie sur la dalle tactile KBD, comme la saisie d'un code d'identification pour déverrouiller l'élément sécurisé. La validation et la signature de la transaction sont déléguées à l'élément sécurisé eSE (le portefeuille matériel) par des commandes émises sur le bus DB2 par l'intermédiaire de l'enclave TEE. Le cas échéant, la saisie du code de déverrouillage est transmise à l'élément sécurisé par le bus DB2. L'élément sécurisé eSE réagit à ces commandes par l'activation de l'indicateur lumineux LD et par l'attente d'un appui sur le bouton B.

Lorsque l'utilisateur appuie sur le bouton B, l'élément sécurisé eSE calcule la signature de la transaction avec les clés privées stockées dans le portefeuille et transmet la signature à l'application par le bus DB2. L'élément sécurisé, ayant réalisé sa tâche, désactive l'indicateur lumineux LD et attend de nouvelles commandes. L'application met à jour la blockchain à travers un service réseau, affiche les informations utiles, et attend une nouvelle interaction avec l'utilisateur.

Si aucune action n'est détectée sur le bouton B après l'écoulement d'un délai, la transaction est annulée. L'élément sécurisé le signale à l'application par le bus DB2, désactive l'indicateur lumineux LD, et attend de nouvelles commandes.

Le bouton physique B a une fonction similaire à celle des boutons B1, B2 d'un portefeuille matériel détaché du type de la figure 2. Un logiciel malveillant, s'il parvient à modifier le montant ou l'adresse de la transaction, ne pourra pas simuler une validation, qui nécessite l'actionnement d'un bouton physique détectable seulement par l'élément sécurisé eSE. Ainsi, l'utilisateur, avant de valider, pourra confirmer que la transaction telle qu'affichée est bien celle qu'il a initiée. Si la transaction a été modifiée, l'utilisateur peut en principe le constater sur l'affichage et annuler la transaction. L'annulation pourra être effectuée classiquement par un appui sur un bouton virtuel sur l'afficheur tactile. La fonction du bouton d'annulation ne peut pas être détournée en une fonction de validation, puisqu'une validation n'est possible qu'à l'aide du bouton B géré exclusivement par l'élément sécurisé eSE.

L'indicateur lumineux LD est activé et confirme à l'utilisateur que l'élément sécurisé est en train de prendre en charge les opérations et que les demandes qui lui sont faites par le terminal sont de source sûre.

Selon une variante un peu plus coûteuse en termes de fabrication du boîtier du terminal mobile, deux boutons physiques peuvent être prévus, sur lesquels il faut appuyer simultanément pour valider une transaction.

Malgré le contrôle de l'afficheur par l'enclave TEE, un logiciel malveillant sophistiqué pourrait modifier les données d'entrée et/ou de sortie de l'application pour les détourner et notamment modifier l'affichage des informations relatives à la transaction devant être vérifiées par l'utilisateur. Par exemple, le logiciel pourrait intercepter des données de transaction saisies par l'application pour les remplacer par des données frauduleuses, comme le montant de la transaction et l'adresse de la transaction. Même si cela est difficile lorsque la saisie est faite en mode sécurisé via l'enclave TEE, une telle attaque n'est pas impossible compte tenu du degré de sécurité offert par une enclave de type TEE. L'application génère alors une transaction avec des données modifiées à l'attention de l'élément sécurisé eSE et un affichage erroné correspondant. L'affichage, qui trahit alors la modification, peut aussi être intercepté et modifié, pour qu'il corresponde à la transaction initialement souhaitée par l'utilisateur. Ainsi, l'utilisateur verra des données de transaction apparemment correctes sur l'afficheur et validera la transaction, mais cette validation s'appliquera à la transaction frauduleuse modifiée qui a été déléguée sournoisement à l'élément sécurisé eSE.

Dans un portefeuille matériel détaché classique, ce type de fraude est déjoué par le fait que le portefeuille matériel reproduit sur son propre afficheur la transaction qu'il va exécuter : l'utilisateur se fie à la transaction affichée par le portefeuille détaché, et peut la comparer à celle affichée par l'application sur le terminal. Une telle fonctionnalité n'est pas envisageable lorsque le portefeuille matériel est embarqué dans un smartphone, compte tenu de la difficulté de prévoir un deuxième afficheur et du surcoût que cela entraînerait.

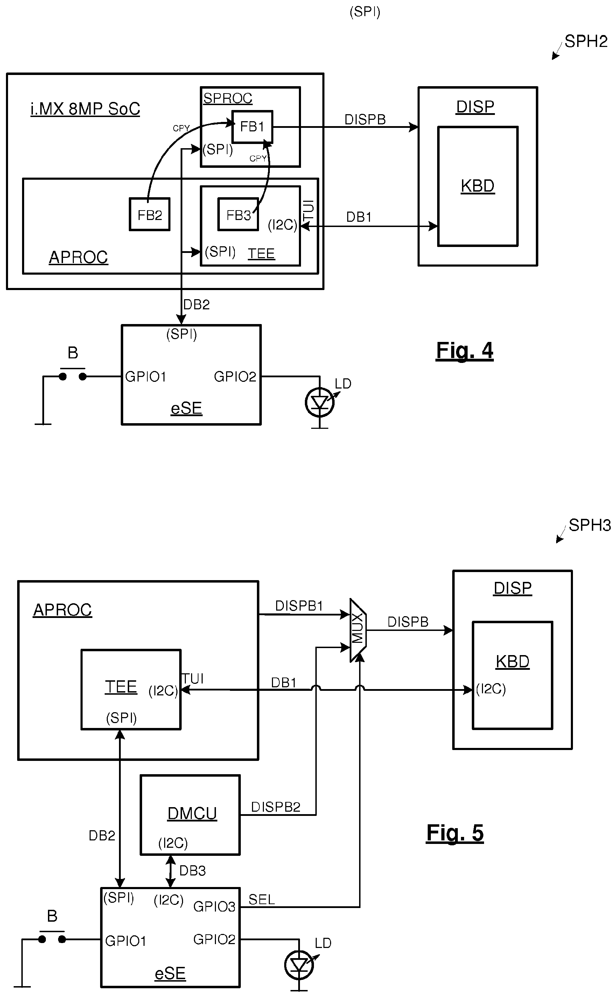

La figure 4 montre un mode de réalisation SPH2 d'un terminal mobile intégrant un portefeuille matériel et mettant en échec ce type de manipulation de l'affichage. Le processeur d'application APROC incluant l'enclave TEE est ici intégré dans un système-sur-puce SoC recevant un processeur secondaire SPROC. Le SoC peut être le circuit i.MX 8M Plus de NXP^{®}. L'élément sécurisé eSE est comme précédemment relié à l'enclave TEE par le bus DB2, par exemple un bus SPI. Le processeur SPROC dispose de son propre contrôleur d'affichage et peut être considéré comme ayant un degré de sécurité élevé du fait qu'il est cloisonné par rapport aux autres circuits du SoC, de façon semblable à un élément sécurisé. Ainsi, à l'instar de l'élément sécurisé, le processeur SPROC peut recevoir des commandes de l'enclave TEE par l'intermédiaire du bus DB2. Le contrôleur d'affichage du processeur SPROC est seul maître du bus DISPB et comporte une mémoire de trame FB1 que le processeur SPROC peut remplir à partir d'une mémoire de trame FB2 du processeur d'application ou d'une mémoire de trame FB3 de l'enclave TEE (flèches CPY), ou encore à partir de données d'affichage générées par lui-même, selon les besoins. Dans un autre mode de réalisation, le processeur SPROC peut afficher directement des données de la mémoire FB2 ou FB3 à partir d'un pointeur qui lui a été fourni. De tels mécanismes d'affichage sont documentés et ne seront pas décrits plus en détail. Ainsi, selon les besoins d'une application en cours d'exécution, l'afficheur DISP reçoit ses données du processeur d'application, de l'enclave TEE, ou du processeur SPROC lui-même.

Avec cette configuration, une transaction est préparée de façon usuelle par une application officielle, telle "Ledger Live", exécutée par le processeur d'application APROC. La dalle tactile KBD est toujours gérée par l'enclave TEE pour sécuriser la saisie par l'utilisateur de données intervenant au cours d'une transaction, par exemple un code de déverrouillage ou un montant de transaction accepté, et délègue le traitement de la transaction à l'élément sécurisé par l'intermédiaire du bus DB2. Afin de pallier des failles potentielles reconnues d'un affichage géré par l'enclave TEE, l'élément sécurisé eSE, qui est lui-même relié au processeur SPROC par le bus DB2, est configuré pour fournir à celui-ci les données de la transaction devant être validées par l'utilisateur.

L'élément sécurisé eSE est configuré pour, après avoir reçu les données de la transaction qu'il doit valider en signant la transaction au moyen d'une clé privée, transmettre au processeur SPROC via le bus DB2 les données d'affichage correspondantes, et demander au processeur SPROC de les afficher via le contrôleur d'affichage FB1, à la place des données qui pourraient être présentes dans les mémoires de trame FB2 et FB3.

Ainsi, même si l'application officielle est configurée pour générer de telles données et les transmettre au contrôleur d'affichage de l'enclave TEE pour remplir la mémoire de trame FB3, ou les transmettre au contrôleur d'affichage du processeur d'application pour remplir la mémoire de trame FB2, ces données ne seront pas affichées et seront remplacées par des données fournies par l'élément sécurisé. En conséquence, si des données compromises produites par l'application se trouvent dans la mémoire de trame FB2 ou FB3, ces données seront ignorées et ce sont les données produites par l'élément sécurisé dans la mémoire de trame FB1 qui seront effectivement affichées.

Ce mode de réalisation SPH2 repose sur l'utilisation d'un système-sur-puce particulier qui pourrait ne pas convenir à certains fabricants de smartphones. De plus il est susceptible d'un type d'attaque qui consisterait à faire croire à l'élément sécurisé qu'il dialogue avec le processeur SPROC alors qu'il dialogue avec une enclave TEE ayant été piratée. L'élément sécurisé n'a donc pas la certitude absolue d'avoir accès à l'afficheur lorsqu'il croit y avoir accès.

On décrira dans ce qui suit des modes de réalisation pouvant être mis en œuvre avec des composants plus conventionnels, tout en offrant un haut niveau de sécurité en ce qui concerne le contrôle des données affichées à l'utilisateur.

La figure 5 montre un mode de réalisation SPH3 d'un terminal mobile qui est dérivé du mode de réalisation SPH1 de la figure 3 et comporte comme précédemment le processeur d'application APROC et l'enclave TEE, l'afficheur DISP, la dalle tactile KBD, l'élément sécurisé eSE, le bouton physique B relié à la broche GPIO1 pour valider des transactions et l'indicateur lumineux LD commandé par la broche GPIO2, pour signaler qu'une opération sécurisée est en cours dans l'élément eSE. Comme précédemment la dalle tactile KBD est contrôlée par l'enclave TEE via le bus DB1, par exemple un bus I2C. L'enclave TEE est reliée à l'élément sécurisé eSE par le bus DB2, par exemple un bus SPI.

Le terminal SPH3 se distingue principalement du terminal SPH1 en ce qu'il comprend un contrôleur d'affichage DMCU au service exclusif de l'élément sécurisé eSE, et un multiplexeur MUX dont la sortie est reliée au bus DISPB de l'afficheur DISP. Ce multiplexeur reçoit sur une première entrée, par l'intermédiaire d'un bus DISPB1, les données d'affichage produites par le processeur d'application APROC. Ces données d'affichage n'ont plus besoin d'être gérées par l'enclave TEE, comme cela est représenté, mais peuvent l'être si cela est souhaité. Une deuxième entrée du multiplexeur reçoit par l'intermédiaire d'un bus DISPB2 des données d'affichage générées par le contrôleur d'affichage DMCU. Une borne d'entrée/sortie GPIO3 de l'élément sécurisé eSE fournit un signal SEL de sélection de l'entrée du multiplexeur qui sera reliée à la sortie de ce dernier. Ainsi, en fonction de la valeur sur signal SEL, le multiplexeur MUX relie le bus DISPB de l'afficheur au bus DISPB1 du processeur d'application APROC ou au bus DISPB2 du contrôleur d'affichage DMCU. Dans une variante, le signal SEL peut aussi être prélevé sur la borne GPIO2 qui commande l'indicateur lumineux LD.

Le contrôleur d'affichage DMCU reçoit des commandes d'affichage de l'élément sécurisé eSE par l'intermédiaire d'un bus DB3, par exemple un bus I2C. Le protocole I2C offre un débit de données relativement bas, mais est utilisé ici pour véhiculer seulement des commandes d'affichage textuelles et vectorielles, utilisant une faible bande passante. L'élément sécurisé eSE est ainsi programmé pour générer des commandes d'affichage basiques pour les transactions qu'il traite et les transmettre au contrôleur d'affichage DMCU.

Le contrôleur d'affichage DMCU est ici un circuit séparé, car les éléments sécurisés couramment disponibles dans le commerce ne sont pas dotés d'un processeur graphique et n'ont pas suffisamment de bande passante pour générer les images matricielles attendues sur le bus d'un afficheur tel que celui d'un smartphone moderne. Le contrôleur d'affichage DMCU est par exemple un microcontrôleur de type STM32 de STMicroelectronics^{®} incluant un contrôleur d'afficheur LCD-TFT équipé d'une interface MIPI-DSI.

L'élément sécurisé eSE est configuré pour commander le multiplexeur MUX de manière à ce qu'il applique par défaut à l'afficheur DISP les données d'affichage provenant du processeur d'application APROC. Lorsqu'une application demande à l'élément sécurisé eSE de signer une transaction, celui-ci envoie des commandes d'affichage des données de la transaction au contrôleur d'affichage DMCU et commute le multiplexeur MUX pour que les données graphiques produites par le contrôleur DMCU parviennent à l'afficheur DISP. L'indicateur lumineux LD est activé et l'élément sécurisé eSE attend la validation de l'utilisateur en scrutant l'état du bouton B.

Ainsi, l'afficheur DISP présente à l'utilisateur des données de transaction effectivement reçues et traitées par l'élément sécurisé eSE. Si ces données ont été modifiées par un programme malicieux, l'utilisateur ne manquera pas de le constater et pourra annuler la transaction.

Il est par ailleurs préférable que la capture des informations saisies par l'utilisateur sur la dalle tactile KBD, par exemple un code de déverrouillage ou autre information sensible telle qu'un montant de transaction visé, présentent un degré de sécurité qui soit au moins de même niveau que celui de l'affichage. Dans les modes de réalisation SPH1, SPH2, SPH3 qui viennent d'être décrits, cette capture est assurée par l'enclave TEE et offre donc un degré de sécurité inférieur à celui de l'affichage. Un plus haut niveau de sécurité pourrait donc être souhaité.

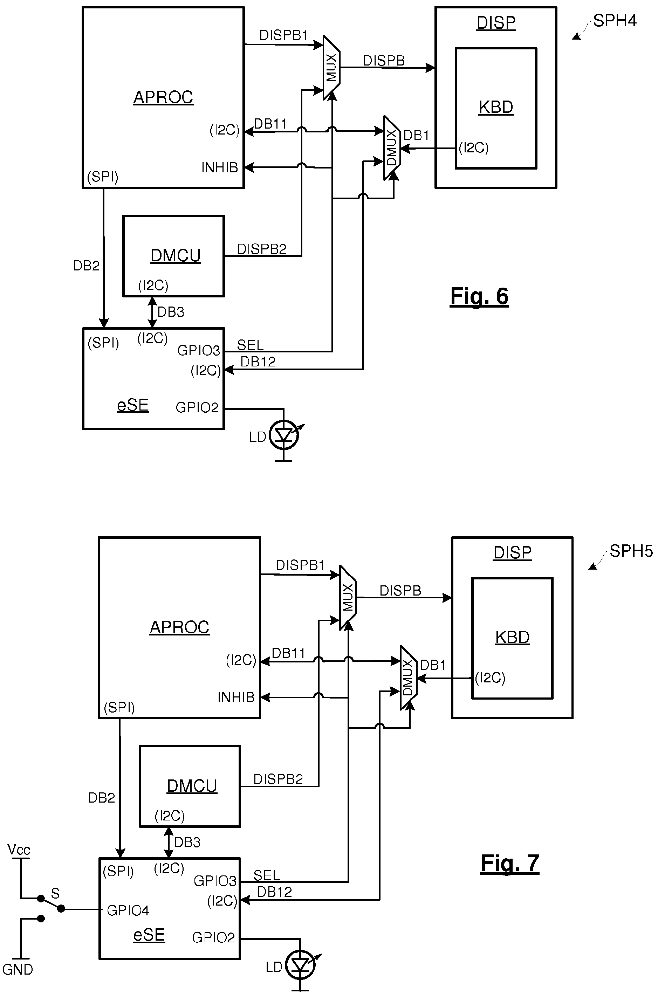

La figure 6 est un schéma bloc d'un mode de réalisation SPH4 d'un terminal mobile qui se distingue de celui SPH3 de la figure 5 en ce que le bus DB1 en sortie de la dalle tactile KBD, ici de type I2C, est relié à l'entrée d'un démultiplexeur DMUX à deux sorties. Une première sortie du démultiplexeur DMUX est reliée au processeur d'application APROC par l'intermédiaire d'un bus DB11, et une deuxième sortie du démultiplexeur est reliée à l'élément sécurisé eSE par l'intermédiaire d'un bus DB12. La sélection du démultiplexeur DMUX peut être opérée par le même signal SEL que celui appliqué au multiplexeur MUX par l'élément sécurisé. Les deux bus DB11 sont de préférence de même type que le bus DB1 pour éviter de prévoir un convertisseur de protocole dans le démultiplexeur DMUX.

Dans ce mode de réalisation, aucune enclave TEE n'est prévue pour exécuter tout ou partie des applications faisant intervenir l'élément sécurisé, lesquelles sont donc exécutées par le processeur d'application APROC à l'exception des étapes déléguées à l'élément sécurisé. Toutefois, rien n'empêche de prévoir une enclave TEE et de l'utiliser pour commander les bus DISPB1 et de réception de données tactiles DB11 lors de l'exécution des phases non sensibles de l'application.

L'élément sécurisé eSE est configuré pour positionner par défaut le multiplexeur MUX et le démultiplexeur DMUX en sorte qu'ils relient l'afficheur DISP et la dalle tactile KBD au processeur d'application, notamment au cours d'une phase préparatoire d'une transaction. L'élément sécurisé modifie ensuite la valeur du signal SEL pendant des phases sensibles d'exécution d'une transaction, afin de recevoir lui-même les informations éventuelles fournies par l'utilisateur via la dalle tactile KBD, et afin de fournir lui-même, par l'intermédiaire du contrôleur d'affichage DMCU, les données de transaction devant être présentées à l'utilisateur.

Ainsi, la dalle tactile échappe au contrôle de l'application lors de sa connexion à l'élément sécurisé, et l'application ne peut plus mettre en œuvre la phase de saisie. La phase de saisie est déléguée à l'élément sécurisé, qui est ici configuré pour gérer un clavier virtuel quant à la saisie et l'affichage de celui-ci.

Dans un mode de réalisation, le bus DB12 est connecté à des broches d'entrée/sortie du contrôleur d'affichage DMCU, au lieu d'être connecté à l'élément sécurisé. Ce mode de réalisation peut être avantageux si le contrôleur d'affichage est un microcontrôleur du type proposé plus haut, ayant une capacité de traitement de données supérieure à celle de l'élément sécurisé. Le contrôleur d'affichage DMCU étant sous le contrôle de l'élément sécurisé, il peut alors recevoir et traiter pour le compte de l'élément sécurisé une grande quantité de données que ce dernier ne pourrait peut-être pas traiter, par exemple des données issues d'un clavier tactile, et lui communiquer le résultat de ce traitement par l'intermédiaire du bus DB3.

Quand une transaction est déléguée par l'application à l'élément sécurisé par le bus DB2, sans passer cette fois par l'enclave TEE, l'élément sécurisé eSE commande le multiplexeur et le démultiplexeur de manière à relier l'afficheur DISP au contrôleur d'affichage DMCU et à relier la dalle tactile KBD à l'élément sécurisé eSE. L'élément sécurisé eSE met en œuvre la phase de saisie, si une saisie est requise. La saisie sur la dalle tactile ne peut plus être interceptée ou modifiée par un logiciel s'exécutant sur le processeur d'application, tandis que toute tentative de modification de l'affichage par un logiciel s'exécutant sur le processeur d'application est ignorée.

Compte tenu de cette configuration, un logiciel s'exécutant sur le processeur d'application ne peut pas simuler des fausses validations sur la dalle tactile, de sorte que le bouton physique B est optionnel : la validation peut être faite en toute sécurité à l'aide de la dalle tactile.

La sécurisation de la dalle tactile KBD qui vient d'être décrite comme un perfectionnement du mode de réalisation SPH3 de la figure 5 est également applicable au mode de réalisation SPH2 de la figure 4 dans lequel, en mode sécurisé, le bus DB1 de la dalle tactile sera aiguillé vers l'élément sécurisé au lieu d'être relié à l'enclave TEE.

Dans un mode de réalisation, le signal SEL, ou tout autre indicateur du mode sécurisé (comme le signal de commande de l'indicateur lumineux LD), peut être utilisé pour inhiber des circuits en principe inutilisés pendant le mode sécurisé. Comme montré sur la figure 6, le signal SEL est par exemple appliqué à une borne INHIB du processeur d'application. Il peut être prévu que le basculement du signal SEL dans sa valeur correspondant au mode sécurisé provoque la réinitialisation du processeur en coupant son signal d'horloge ou en coupant son alimentation. Dans ce cas, tout logiciel malveillant s'exécutant sur le processeur d'application effectuant des analyses pour déduire des clés cryptographiques ou autres informations sensibles est rendu inopérant pendant la transaction sécurisée.

L'inactivation totale du processeur d'application est notamment possible dans la configuration de la figure 6, où toutes les fonctions devant rester actives pendant la transaction sont déportées sur l'élément sécurisé eSE. Dans des cas où le processeur d'application ne peut être désactivé, on peut utiliser le signal SEL pour désactiver des circuits annexes pouvant servir à la déduction d'informations sensibles, comme les accéléromètres permettant de déduire les positions des appuis sur la dalle tactile. Les accéléromètres sont généralement intégrés dans un circuit dédié de centrale inertielle ou IMU ("Inertial Measurement Unit"). Une telle centrale inertielle peut être désactivée en arrêtant son horloge, en coupant son alimentation ou en coupant son lien de communication avec le processeur d'application, généralement un bus I2C.

Un logiciel malveillant peut être conçu pour initier des transactions alors que l'élément sécurisé est dans une configuration où il ne demande pas de code de déverrouillage, par exemple pendant une durée limitée après avoir effectué une transaction précédente. Le logiciel malveillant tente dans ce cas de modifier l'affichage, mais cette tentative échoue du fait que c'est l'élément sécurisé eSE qui est maître de l'affichage dans les modes de réalisation des figures 5 et 6. Ainsi, l'affichage reflète la transaction effectivement initiée par le logiciel malveillant, tandis que l'élément sécurisé eSE attend la validation de l'utilisateur sur la dalle tactile (dans la configuration de la figure 6), ou sur le bouton physique B (dans la configuration de la figure 4 ou 5). Dans le cas de la figure 3, la modification frauduleuse de l'affichage est possible, de sorte que l'utilisateur peut être trompé quant à la nature de la transaction.

Si la transaction frauduleuse est initiée à un moment où l'utilisateur a son terminal mobile en vue, il voit, sans l'avoir sollicité, passer le terminal mobile en mode sécurisé (indicateur lumineux LD), afficher la transaction et demander sa validation. L'utilisateur pourra vérifier l'affichage et annuler la transaction, mais cela demande à l'utilisateur d'être attentif et ne pas valider la transaction par mégarde.

Si l'utilisateur n'a pas le terminal mobile en vue, la transaction est en principe annulée automatiquement à l'expiration d'un délai d'attente. Toutefois, si le terminal mobile est soumis à des secousses dans une poche ou un sac, une validation intempestive pourrait survenir avant l'expiration du délai d'attente, soit par un appui sur le bouton physique B (figures 3 à 5), soit par un appui sur la dalle tactile (figure 6) qui pourrait être configuré pour être opérant sur l'écran de veille du terminal mobile au moment de demander une validation.

La figure 7 montre un mode de réalisation SPH5 d'un terminal mobile mettant en échec ce type de fraude. En plus des éléments du mode de réalisation de la figure 6, un commutateur bistable S physique est connecté à une broche d'entrée/sortie GPIO4 de l'élément sécurisé eSE. Dans une première position, le commutateur S relie l'entrée GPIO4 à un niveau logique haut, par exemple une tension d'alimentation Vcc, et dans une deuxième position, le commutateur S relie l'entrée GPIO4 à un niveau logique bas, par exemple un potentiel de masse GND. Le commutateur S est agencé, par exemple, sur l'une des parois latérales du terminal mobile.

L'élément sécurisé eSE est programmé pour ne pas traiter les commandes reçues via le bus DB3 dans l'une des positions du commutateur S, par exemple la première, et accepter les demandes de transactions reçues via le bus DB3 dans l'autre position. Le terminal SPH5 est conçu pour que le commutateur S soit le seul moyen disponible pour commuter le mode de l'élément sécurisé, c'est-à-dire qu'une application ne peut plus à elle seule déléguer le traitement d'une transaction.

Ainsi, le mode de l'élément sécurisé est exclusivement sous le contrôle de l'utilisateur qui choisit le mode à l'aide du commutateur S selon les besoins.

Le commutateur S étant initialement dans la position du mode inactif, une application susceptible d'initier des transactions est alors conçue pour solliciter l'utilisateur à changer de mode lorsqu'elle s'apprête à déléguer le traitement de la transaction à l'élément sécurisé eSE. Elle peut envoyer à l'afficheur DISP un message du type "Veuillez placer le téléphone en mode sécurisé à l'aide du commutateur", de préférence avec les informations relatives à la transaction en cours. Ce message est analogue à un message invitant l'utilisateur à connecter son portefeuille détaché classique au terminal mobile.

L'utilisateur bascule alors le commutateur pour passer en mode actif. L'élément sécurisé eSE réagit en prenant diverses mesures protectrices, comme basculer le signal SEL pour relier l'afficheur DISP et la dalle tactile KBD respectivement au contrôleur d'affichage dédié DMCU et à l'élément sécurisé eSE. L'indicateur lumineux LD est aussi activé pour signaler à l'utilisateur que le terminal mobile est en mode sécurisé. L'élément sécurisé eSE envoie un acquittement à l'application qui reprend l'exécution en transmettant les informations de la transaction à l'élément sécurisé. L'élément sécurisé eSE opère la phase de saisie sur la dalle tactile KBD, le cas échéant, et demande la validation à l'utilisateur en affichant de nouveau les informations relatives à la transaction.

Lorsque la transaction est validée et signée, l'élément sécurisé eSE communique la transaction signée à l'application qui l'inscrit sur la blockchain. L'élément sécurisé sollicite l'utilisateur à changer de mode, en envoyant à l'afficheur DISP un message du type "Veuillez quitter le mode sécurisé en basculant le commutateur". Ce message est analogue à celui indiquant que l'utilisateur peut retirer son portefeuille détaché classique. Lorsque le commutateur est basculé, les connexions initiales de l'afficheur et de la dalle tactile sont rétablies, et l'indicateur lumineux LD est désactivé.

Le commutateur S peut aussi être mis en œuvre dans les structures des figures 4 et 5, où la dalle tactile KBD n'est pas reliée à l'élément sécurisé. Dans ce cas, c'est l'application qui opère la phase de saisie avant de solliciter le basculement du commutateur S.

Bien entendu, le commutateur S, à la merci de l'utilisateur, pourrait être basculé à des moments où ce n'est pas requis, ou ne pas être basculé quand c'est requis. Différentes combinaisons ne sont ainsi pas "normales", et cela peut être signalé à l'utilisateur par des messages affichés ou des alarmes, incitant l'utilisateur à basculer le commutateur pour que les opérations puissent reprendre normalement.

Un logiciel malveillant pourrait également se comporter comme une application officielle en demandant le basculement de mode. Toutefois, comme l'utilisateur n'a pas initié la transaction et qu'on lui demande une action relativement contraignante, il est susceptible d'être plus vigilant. Le logiciel malveillant ne peut plus afficher un message trompeur hors propos dans ce contexte, puisque l'utilisateur s'attend à voir des informations de transaction. De telles informations de transaction seront difficiles à rendre crédibles, d'autant plus si elles sont vraies - typiquement un transfert d'un montant élevé à une adresse inconnue. Si le logiciel malveillant tente de cacher la nature de la transaction, celle-ci sera révélée et différente au moment où elle est affichée pour validation par l'élément sécurisé eSE, si l'utilisateur a quand même été incité à basculer en mode sécurisé.

En tout cas, une transaction en attente, qu'elle soit frauduleuse ou non, ne peut plus être validée par un appui intempestif sur un bouton physique ou virtuel, car l'utilisateur doit intentionnellement basculer le terminal mobile en mode sécurisé pour valider la transaction.

Dans les modes de réalisation qui viennent d'être décrits en relation avec les figures 5 à 7, l'élément sécurisé prend le contrôle de l'afficheur DISP lorsque qu'il bascule dans le mode sécurisé, le processeur d'application APROC ou le cas échéant l'enclave TEE n'ayant alors plus accès à celui-ci. Or, dans certaines applications sécurisées et notamment celles qui s'exécutent sur des portefeuilles matériels détachés, il est prévu que les données de la transaction soient affichées simultanément sur l'écran du dispositif hôte (téléphone mobile ou PC exécutant par exemple le logiciel "Ledger Live") et sur l'afficheur du portefeuille matériel. Ainsi, l'utilisateur peut d'un seul coup d'œil vérifier que les données de transaction présentées par l'application sont identiques à celles présentées par le portefeuille matériel et sur le point d'être exécutées par l'élément sécurisé.

Dans ce qui précède, on a relevé qu'une telle fonctionnalité n'est pas envisageable lorsque le portefeuille matériel est embarqué dans un smartphone, compte tenu de la difficulté de prévoir un deuxième afficheur et du surcoût que cela entraînerait. On a ainsi proposé que l'affichage des données de transaction passe sous le contrôle de l'élément sécurisé.

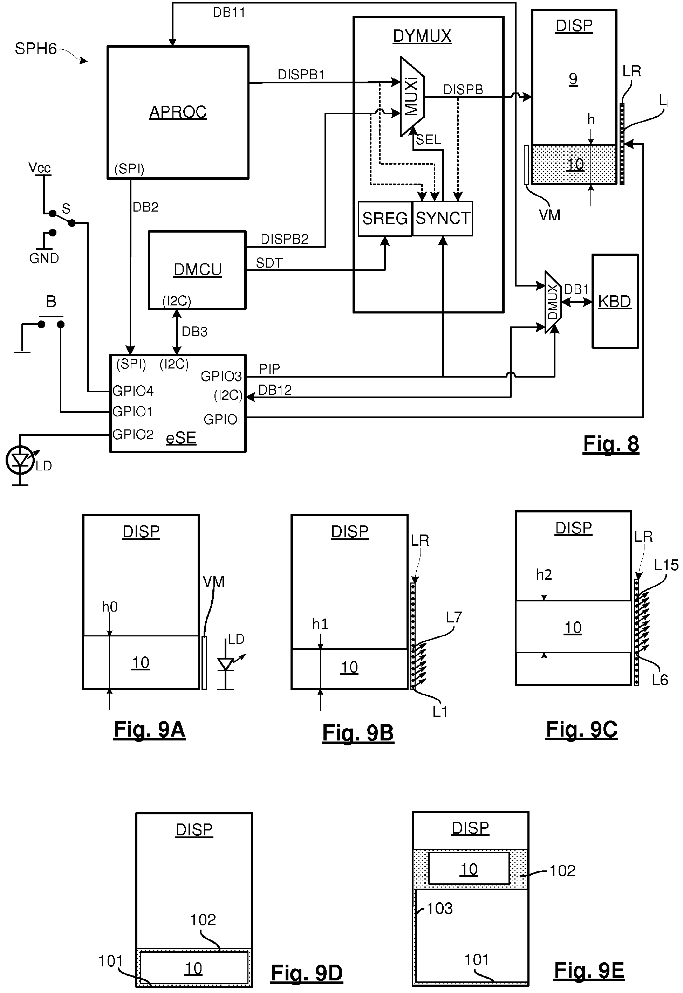

Dans un mode de réalisation SPH6 d'un terminal connecté intégrant un portefeuille matériel tel que montré sur la figure 8, un multiplexeur dynamique DYMUX est prévu pour permettre à l'élément sécurisé eSE et au processeur d'application APROC de présenter en même temps des informations sur l'afficheur, par une incrustation d'une image sécurisée fournie par l'élément sécurisé dans une image non sécurisée fournie par le processeur d'application. L'image sécurisée est incrustée dans une région 10 de l'afficheur DISP. Le reste de la surface d'affichage disponible forme une région 9 qui reçoit la partie de l'image non sécurisée qui n'est pas masquée par l'image sécurisée incrustée. Les régions 9 et 10 sont de préférence telles qu'elles couvrent ensemble l'intégralité de la surface d'affichage disponible.

Une telle incrustation d'image améliore considérablement la sécurité offerte par le terminal et son ergonomie lors de la conduite d'une transaction. Par exemple, le processeur d'application peut afficher dans la région 9 l'information suivante : "vous souhaitez acheter 2 bitcoins pour une valeur de 50 000 USD" tandis que l'élément sécurisé affiche dans la région 10 de l'afficheur l'information suivante "veuillez confirmer votre achat de 2 bitcoins pour une valeur de 50 000 USD" ainsi qu'une représentation d'un bouton de validation sur lequel l'utilisateur doit exercer une action tactile pour déclencher la transaction.

Comme autre exemple, le processeur d'application peut afficher dans la région 9 l'information suivante : "veuillez confirmer votre demande d'achat de 2 bitcoins pour une valeur de 50 000 USD en confirmant sur le clavier tactile sécurisé le nombre de bitcoins que vous voulez acheter puis la valeur de cette transaction" tandis que l'élément sécurisé affiche dans la région 10 un clavier virtuel permettant à l'utilisateur de saisir les deux données de la transaction, ici le nombre de bitcoins et la valeur de la transaction.

Dans encore une variante, le bouton B est utilisé pour confirmer la transaction, le processeur d'application affiche dans la région 9 l'information suivante : "veuillez confirmer votre demande d'achat de 2 bitcoins pour une valeur de 50 000 USD en appuyant sur le bouton B" tandis que l'élément sécurisé affiche dans la région 10 la même information " veuillez confirmer votre demande d'achat de 2 bitcoins pour une valeur de 50 000 USD en appuyant sur le bouton B". Toute différence entre les données de transactions affichées par le processeur d'application et l'élément sécurisé sera perçue par l'utilisateur en raison de la simultanéité de ces affichages.

Le mode de réalisation SPH6 montré sur la figure 8, permettant de réaliser une telle incrustation d'image, se distingue de celui SPH5 montré sur la figure 7 en ce que le multiplexeur matériel MUX précédemment décrit est remplacé par un multiplexeur dynamique DYMUX. Le multiplexeur dynamique DYMUX comprend un multiplexeur matériel MUXi qui comporte comme le multiplexeur MUX de la figure 7 une première entrée reliée au bus DISPB1 du processeur d'application, une second entrée reliée au bus DISPB2 du contrôleur d'affichage DMCU de l'élément sécurisé eSE et une sortie reliée au bus DISPB qui contrôle l'afficheur. Le multiplexeur dynamique DYMUX comprend également un circuit de synchronisation SYNCT qui fournit le signal SEL au multiplexeur MUXi et reçoit un signal d'autorisation de superposition d'image PIP fourni par la borne GPIO3 de l'élément sécurisé.

Le signal PIP présente une valeur active et une valeur inactive, correspondant en pratique à deux valeurs logiques de ce signal, par exemple 0 et 1 ou l'inverse. Lorsqu'il n'est pas sollicité pour une transaction, ou lorsqu'il n'a pas besoin - ou plus besoin - d'interfacer avec l'utilisateur, l'élément sécurisé porte le signal PIP à la valeur inactive. Dans ce cas, le circuit de synchronisation SYNCT commande le multiplexeur MUXi de manière à ce que le bus DISPB en sortie de celui-ci soit en permanence relié au bus DISPB1 du processeur d'application. Le processeur d'application a alors le plein contrôle de l'intégralité de l'afficheur.

Lorsqu'il bascule dans le mode sécurisé pour participer à l'exécution d'une transaction, et/ou lorsqu'il a besoin d'interfacer avec un utilisateur, l'élément sécurisé met le signal PIP à sa valeur active, ce qui déclenche la superposition de données d'image fournies par le processeur d'application et de données d'image fournies par l'élément sécurisé par l'intermédiaire du contrôleur d'affichage DMCU, au rythme des modifications de la valeur du signal SEL fourni par le circuit SYNCT.

Les données d'image fournies par le processeur d'application APROC sont alors affichées dans la région 9 de l'afficheur et les données d'image fournies par le contrôleur d'affichage DMCU sont affichées dans la région 10. Plus précisément, les données d'image fournies par le processeur d'application et qui correspondent à la région 10 sont remplacées - ou "écrasées" ("overwritted") - par les données d'images fournies par l'élément sécurisé, de sorte que les données d'image qui s'affichent dans la région 9 sont celles qui n'ont pas été écrasées par celles fournies par le contrôleur d'affichage DMCU.

Pour fournir le signal SEL, le circuit SYNCT prend en compte une donnée de configuration SDT ("Setup Data") qui détermine la taille, la forme et l'emplacement de la région 10 occupée par l'image incrustée. Le circuit SYNCT prend également en compte des informations de synchronisation prélevées sur les bus DISPB1 et DISPB2 et DISPB ou extraites de ceux-ci, afin de les transitions sur le bus DISPB entre les données d'image fournies par le processeur d'application APROC et données d'image fournies par le contrôleur d'affichage DMCU, ne provoquent pas l'apparition de parasites ou de cisaillements de l'image (appelés classiquement "déchirement d'image" ou "tearing").

Dans un mode de réalisation, la taille de la région 10 est fixe et la donnée de configuration SDT est enregistrée "en dur" dans un registre de configuration SREG du multiplexeur DYMUX. La donnée SDT comprend par exemple le rang de la première ligne et le rang de la dernière ligne de la région 10, qui détermine la hauteur h de la région 10, ou, de façon équivalente, le rang de la première ligne et le nombre de lignes suivantes. Alternativement, la donnée SDT peut ne comprendre que le rang de la première ligne de la région 10 si celle-ci occupe toute la partie basse de l'afficheur. Dans un autre mode de réalisation, le registre de configuration est au contraire configurable et reçoit la donnée de configuration SDT de l'extérieur, celle-ci étant par exemple fournie par le contrôleur d'affichage DMCU à la demande de l'élément sécurisé, ou directement fournie par l'élément sécurisé.

Le bus DB1 en sortie de la dalle tactile KBD, ici de type I2C, est comme précédemment relié à l'entrée du démultiplexeur DMUX dont la première sortie est reliée au processeur d'application APROC par le bus DB11 et la deuxième sortie reliée à l'élément sécurisé eSE par le bus DB12.

La sélection du démultiplexeur DMUX est opérée ici par le signal PIP de sorte que pendant toute la période où le terminal fonctionne en mode sécurisé et où les parties d'image fournies par l'élément sécurisé remplacent celles fournies par le processeur d'application, l'élément sécurisé a le contrôle exclusif du pavé tactile. Il n'est donc pas envisageable - et en pratique peu nécessaire - que pendant le fonctionnement en mode sécurisé, le processeur d'application propose à l'utilisateur des fonctionnalités tactiles dans la région 9 , sauf à prévoir que celles-ci soient prises en charge par l'élément sécurisé qui répercutera ensuite l'information tactile au processeur d'application.

Si cela peut avoir un intérêt pratique ou ergonomique, l'homme de l'art pourra toutefois prévoir un mode de réalisation plus complexe afin que le processeur d'application reçoive en temps réel les données tactiles correspondant à la région 9 de l'afficheur où il peut afficher des informations. A cet effet le démultiplexeur DMUX pourrait par exemple être contrôlé par le signal SEL fourni par le circuit SYNCT.

L'analyse du risque attaché à chaque configuration de terminal proposée dans la présente demande fait apparaître ici le risque qu'un programme malveillant ayant pris le contrôle du processeur d'application ou du bus DISPB1, affiche dans la région 10 des informations qui simulent celles affichées par l'élément sécurisé pendant l'exécution d'une transaction. Ainsi, l'utilisateur, après avoir lui-même sollicité une transaction, pourrait être tenté de penser que cette transaction est en cours d'exécution par l'élément sécurisé alors que la région 10 est encore sous le contrôle du processeur d'application et que l'élément sécurisé n'a pas encore été sollicité. Il convient donc de s'assurer que l'utilisateur est pleinement informé que l'information affichée dans la région 10 provient réellement de l'élément sécurisé. Afin de surmonter ce problème, deux cas doivent être distingués :
1) la région 10 est d'une hauteur fixe h0 et occupe un emplacement fixe sur l'afficheur, sur toute la largeur de l'afficheur. Par exemple, la région 10 occupe les "N" dernières lignes de l'afficheur correspondant à la hauteur h0, comme montré sur la figure 9A.
2) la région 10 est d'une hauteur h variable et peut éventuellement être située dans un emplacement variable sur tout ou partie de la hauteur de l'afficheur, la hauteur h de la région 10 et son emplacement étant définis par la donnée de configuration SDT. Dans un exemple montré sur la figure 9B, la région 10 présente une hauteur h1 et occupe toute la partie inférieure de l'afficheur. Dans un autre exemple montré sur la figure 9C, la région 10 présente une hauteur h2 supérieure à h1 et s'étend sensiblement sur les deux tiers de la moitié inférieure de l'afficheur sans occuper la partie inférieure de celui-ci.

Dans un mode de réalisation correspondant au premier cas, l'élément sécurisé est configuré pour activer l'indicateur lumineux LD lorsqu'il porte le signal PIP à la valeur active. Dans ce cas, et comme schématisé sur la figure 9A, l'utilisateur est pleinement informé au moyen de l'indicateur lumineux LD, qui est sous le contrôle exclusif de l'élément sécurisé via la broche GPIO2, que l'élément sécurisé contrôle la région 10. Comme moyen d'information supplémentaire de l'utilisateur, l'emplacement de la région 10 peut être indiqué au moyen d'un repère visuel tel qu'une barre de couleur VM prévue sur le boîtier du terminal, à côté de l'afficheur, sur toute la hauteur de la région 10.

Dans un mode de réalisation correspondant au second cas, une rangée LR d'indicateurs lumineux Lᵢ formés chacun par une diode LED, est prévue le long de l'afficheur, et s'étend sur tout ou partie de sa hauteur. La rangée d'indicateurs lumineux est pilotée par des broches d'entrée/sortie GPIOi de l'élément sécurisé, et est prévue pour indiquer l'emplacement précis de la région 10, chaque indicateur lumineux étant contrôlé individuellement par l'élément sécurisé. Ainsi, dans l'exemple de la figure 9B, l'élément sécurisé allume les 7 premières diodes L1 à L7, et dans l'exemple de la figure 9C, l'élément sécurisé allume les diodes L6 à L15. L'utilisateur est donc pleinement informé que l'élément sécurisé contrôle la région 10, et est également informé de l'emplacement de cette région 10. Dans un tel mode de réalisation, la rangée LR d'indicateurs lumineux remplace l'indicateur lumineux unique LD précédemment décrit, qui n'est plus nécessaire.

Dans un autre mode de réalisation, correspondant au second cas et illustré sur les figures 9D, 9E, deux mesures sont prévues pour délimiter la région 10 et informer l'utilisateur que l'élément sécurisé contrôle cette région :
i) une ou plusieurs lignes de l'afficheur, par exemple la dernière ligne ou les dernières lignes de celui-ci, forment une région de référence 101 qui est sous le contrôle permanent de l'élément sécurisé, grâce à une configuration correspondante du multiplexeur dynamique DYMUX. Une telle configuration, indépendante de la valeur du signal PIP, empêche le processeur d'application d'afficher des informations dans cette région.
ii) lorsque l'élément sécurisé bascule dans le mode sécurisé et prend le contrôle de la région 10, il encadre celle-ci d'une bordure 102 ayant une apparence déterminée qui doit être identique à celle de la région 101. Si la région 10 n'est pas dans le prolongement immédiat de la région 101, l'élément sécurisé peut également et optionnellement afficher une région de liaison 103 reliant la bordure 102 à la région 101, dont l'apparence est identique à celle de la région 101.

L'apparence susmentionnée de la région de référence 101 est de préférence variable et aléatoire. Elle peut consister en une couleur déterminée ou en une combinaison de couleurs déterminée, en un motif déterminé comprenant une combinaison de couleurs ou un dégradé de gris, en une texture visuelle déterminée, en des extraits de photographies, etc. Etant donné qu'un programme malicieux ne peut avoir accès aux informations envoyées par l'élément sécurisé au contrôleur d'affichage DMCU, qui déterminent l'apparence de la région de référence 101, un tel programme malicieux sera dans l'incapacité, s'il veut simuler la région 10, d'encadrer celle-ci avec une bordure 102 ayant la même apparence que la région de référence 101.

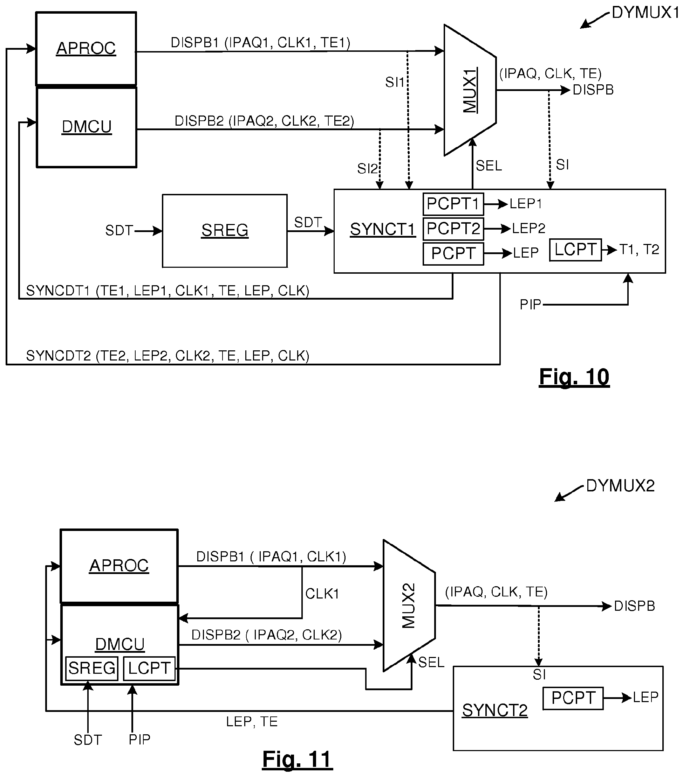

La mise en œuvre du multiplexeur dynamique DYMUX peut se faire de diverses manières à la portée de l'homme de l'art. Certaines seront décrites dans ce qui suit en relation avec les figures 10 à 15, qui montrent des modes de réalisation DYMUX1, DYMUX2, DYMUX3, DYMUX4, DYMUX5 et DYMUX6 de ce multiplexeur.

Le multiplexeur dynamique DYMUX1 de la figure 10 comprend un multiplexeur matériel MUX1, un circuit de synchronisation SYNCT1 et le registre de configuration SREG. Dans le mode de réalisation considéré ici, les bus DISPB1, DISPB2 véhiculent chacun des paquets de données formant des pixels, respectivement IPAQ1, IPAQ2, ainsi qu'un signal d'horloge, respectivement CLK1, CLK2, et un signal de synchronisation, respectivement TE1, TE2 ("Tearing Effect Signal"), utilisé classiquement comme un moyen permettant d'éviter le déchirement de l'image. Selon la valeur du signal SEL, les données d'image IPAQ fournies en sortie du multiplexer MUX1 sont les données IPAQ1 ou les données IPAQ2, le signal d'horloge CLK est le signal CLK1 ou le signal CLK2, et le signal de fin de trame TE est le signal TE1 ou le signal TE2. Ce dernier signal est émis par exemple toutes les 20 ms pour une image rafraîchie à la fréquence de 50 Hz.

Le circuit SYNCT1 comporte un compteur de ligne LCPT qui compte les lignes affichées sur le bus DISPB et est configuré pour déterminer, à partir des données de configuration SDT présentes dans le registre SREG, les instants T1 où les paquets présents sur le bus DISPB1 doivent être fournis sur le bus DISPB, et les instants T2 où les paquets présents sur le bus DISPB2 doivent être fournis sur le bus DISPB à la place des paquets présents sur le bus DISPB1, soit les instants où le signal SEL doit changer de valeur.

Pour permettre un contrôle précis des instants T1 et T2, le circuit de synchronisation SYNCT1 prélève sur les bus DISPB1, DISPB2 et DISPB des informations de synchronisation SI1, SI2, SI. Les informations de synchronisation SI1, SI2, SI comprennent par exemple les signaux d'horloge CLK1, CLK2, CLK et de fin de trame TE1, TE2, TE. Le circuit de synchronisation SYNCT1 comporte également des compteurs de pixels PCPT1, PCPT2, PCPT associés respectivement aux bus DISPB1, DISPB2, DISPB, qui fournissent chacun un signal de fin de ligne, respectivement LEP1, LEP2, LEP ("Line End Pulse"). Chaque compteur est remis à zéro après la détection d'une fin de ligne, puis compte de nouveau un nombre de pixels jusqu'à atteindre le nombre de pixels que comprend une ligne, à la suite de quoi il émet de nouveau le signal de fin de ligne et se remet à zéro, et ainsi de suite. Le fonctionnement de ces compteurs est à la portée de l'homme de l'art et repose sur des principes connus d'analyse du signal vidéo. En effet, on peut connaître la longueur d'une ligne en analysant le contenu de tous les paquets de données qu'elle comporte. Un signal de fin de ligne peut aussi être détecté via un système de mesure analogique, car une fin de ligne sur un signal MIPI correspond à une transition de la tension d'un signal électrique d'une valeur de l'ordre de 200 mV à une valeur de l'ordre de 2 V. Une bascule de Schmitt peut donc également être utilisée pour déterminer la fin d'une ligne.

Le circuit de synchronisation SYNCT1 envoie au contrôleur d'affichage DMCU des données de synchronisation SYNCDT1 concernant le bus DISPB1 et le bus DISPB, et envoie au processeur d'application APROC des données de synchronisation SYNCDT2 concernant le bus DISPB2 et le bus DISPB. Les données de synchronisation SYNCDT1 comprennent par exemple les signaux de fin de trame TE1, TE, les signaux de fin de ligne LEP1, LEP et les signaux d'horloge CLK1, CLK. Les données de synchronisation SYNCDT2 comprennent par exemple les signaux de fin de trame TE2, TE, les signaux de fin de ligne LEP2, LEP et les signaux d'horloge CLK2, CLK. Ainsi, le processeur d'application APROC reçoit des informations sur l'état du bus DISPB2 contrôlé par le contrôleur d'affichage DMCU et réciproquement le contrôleur d'affichage DMCU reçoit des informations sur l'état du bus DISPB1 contrôlé par le processeur d'application APROC. Le processeur d'application et le contrôleur d'affichage peuvent ainsi mettre en œuvre une stratégie de synchronisation commune permettant au circuit SYNCT1 d'appliquer le signal SEL au multiplexeur matériel MUX1 sans provoquer l'apparition de parasites ou un déchirement de l'image affichée. Il n'est toutefois pas indispensable en pratique de prévoir un basculement immédiat entre les deux bus DISPB1, DISPB2. Il est en effet possible avec la plupart des écrans de disposer d'une certaine latence dans la fourniture des données de ligne. La commutation du multiplexeur peut donc présenter une telle "latence" entre l'arrêt du flux véhiculé par le bus DISPB1 et l'application du flux véhiculé par le bus DISPB2, ou réciproquement, sans toutefois que cette latence soit trop importante au risque d'altérer la fréquence d'affichage.

Le mode de réalisation du multiplexeur DYMUX1 qui vient d'être décrit est générique et peut être simplifié en n'utilisant qu'une partie des signaux de synchronisation susmentionnés. A titre d'exemple, le multiplexeur dynamique DYMUX2 de la figure 11 comprend un multiplexeur matériel MUX2 de même type que le multiplexeur MUX1 et un circuit de synchronisation simplifiée SYNCT2. Ce dernier ne comporte que le compteur de pixels PCPT fournissant le signal de fin de ligne LEP, et extrait le signal de fin de trame TE des données circulant sur le bus de sortie DISPB. Le signal de fin de ligne LEP et le signal de fin de trame TE sont envoyés au contrôleur d'affichage DMCU et au processeur d'application APROC pour qu'ils se recalent sur la même référence à chaque nouvelle ligne et à chaque nouvelle image. Le contrôleur d'affichage DMCU reçoit par ailleurs le signal d'horloge CLK1 du bus DISPB1 et assure lui-même la fourniture du signal SEL au multiplexeur matériel MUX2. A cet effet, le contrôleur d'affichage DMCU est équipé du registre de configuration SREG, du compteur de ligne LCPT et reçoit le signal PIP. Le signal PIP lui permet de déterminer, à partir des données de configuration SDT présentes dans le registre SREG, les instants T1 où les paquets présents sur le bus DISPB1 doivent être fournis sur le bus DISPB, et les instants T2 où les paquets présents sur le bus DISPB2 doivent être fournis sur le bus DISPB à la place des paquets présents sur le bus DISPB1.

Dans ce mode de réalisation, le contrôleur d'affichage DMCU s'adapte automatiquement au signal d'horloge CLK1 du bus DISPB1 contrôlé par le processeur d'application, et peut remplacer des données d'image fournies par ce dernier par des données d'image fournies par le contrôleur d'affichage DMCU de l'élément sécurisé, sans provoquer l'apparition de parasites ou un déchirement de l'image affichée.

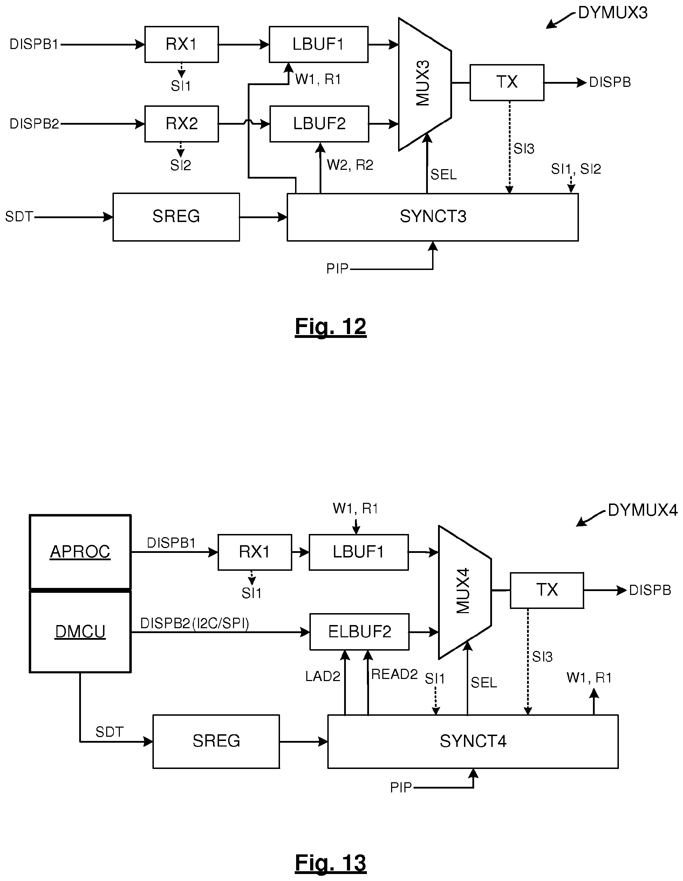

Le multiplexeur dynamique DYMUX3 de la figure 12 comprend un multiplexeur matériel MUX3, un circuit de synchronisation SYNCT3, le registre SREG, un circuit de réception RX1 relié au bus DISPB1, un circuit de réception RX2 relié au bus DISPB2, un tampon de ligne LBUF1 dont l'entrée est reliée à la sortie du circuit RX1 et dont la sortie est reliée à une première entrée du multiplexeur MUX3, un tampon de ligne LBUF2 dont l'entrée est reliée à la sortie du circuit RX2 et dont la sortie est reliée à une seconde entrée du multiplexeur MUX3, et un circuit de transmission TX dont l'entrée est reliée à la sortie du multiplexeur MUX3 et dont la sortie est reliée au bus DISPB. A la différence des multiplexeurs MUX1, MUX2 des figures 10, 11, le multiplexeur MUX3 est un multiplexeur de données numériques brutes et non un multiplexeur de données d'image reçues sous une forme encapsulée dans une trame codée selon un protocole déterminé. En effet, les données brutes véhiculées sur le bus DISPB1 sont décodées - ou plus précisément désencapsulées - par le circuit de réception RX1, puis chargées dans le tampon de ligne LBUF1 pour être ensuite appliquées sur la première entrée du multiplexeur MUX3 . De même, les données brutes véhiculées sur le bus DISPB2 sont désencapsulées par le circuit de réception RX2 puis chargées dans le tampon de ligne LBUF2 pour être ensuite appliquées sur la seconde entrée du multiplexeur MUX3. A cet effet, le circuit SYNCT3 applique aux tampons LBUF1, LBUF2 des signaux d'écriture W1, W2 et de lecture R1, R2.

Les circuits de réception RX1, RX2 fournissent au circuit SYNCT3 des informations de synchronisation SI1, SI2 lui permettant de compter le nombre de lignes d'une image ayant été affichées et de déterminer les instants T1 où le contenu du tampon LBUF1 doit être appliqué à l'entrée du circuit de transmission TX ainsi que les instants T2 où le contenu du tampon LBUF2 doit être appliqué à l'entrée du circuit de transmission TX. Le circuit de transmission TX reconstitue sur le bus DISPB, à partir des données brutes fournies par les tampons LBUF1, LBUF2, une trame vidéo codée selon le protocole désiré, qui peut être le même que celui des bus DISPB1, DISPB2 ou un autre protocole. Le circuit TX communique également au circuit SYNCT3 des informations de synchronisation SI3 lui permettant de parfaire le contrôle du multiplexeur MUX3.

Le multiplexeur dynamique DYMUX4 de la figure 13 comprend un multiplexeur matériel MUX4 identique ou de même type que le multiplexeur MUX3, et un circuit de synchronisation SYNCT4. Il diffère principalement du multiplexeur DYMUX3 en ce que le circuit de réception RX2 est supprimé, le tampon de ligne LBUF2 étant remplacé par un tampon de ligne étendu ELBUF2 pouvant recevoir des données brutes correspondant à plusieurs lignes de l'image à incruster. Le contrôleur d'affichage DMCU accède directement au tampon de ligne étendu ELBUF2 sans passer par la fourniture d'un signal vidéo. A cet effet le bus DISPB2, au lieu d'être un bus véhiculant des trames vidéo selon le protocole MIPI-DSI ou autre protocole vidéo, peut être simplement un bus I2C ou SPI. Lorsque le tampon ELBUF2 a été rempli par contrôleur d'affichage DMCU, le circuit de synchronisation SYNCT4 réalise plusieurs cycles de lecture du tampon pour la fourniture de son contenu au multiplexeur MUX4, en appliquant successivement au tampon des adresses de ligne LAD2 suivies d'un signal de lecture READ2. Afin d'éviter l'apparition d'artefacts visuels dus à la mise à jour des données dans le tampon de ligne étendu ELBUF2, un système à double tampon peut être prévu, un premier tampon étant utilisé pendant que le second tampon est rempli, le second tampon, une fois plein, étant ensuite utilisé pendant que le premier tampon est rempli, et ainsi de suite.

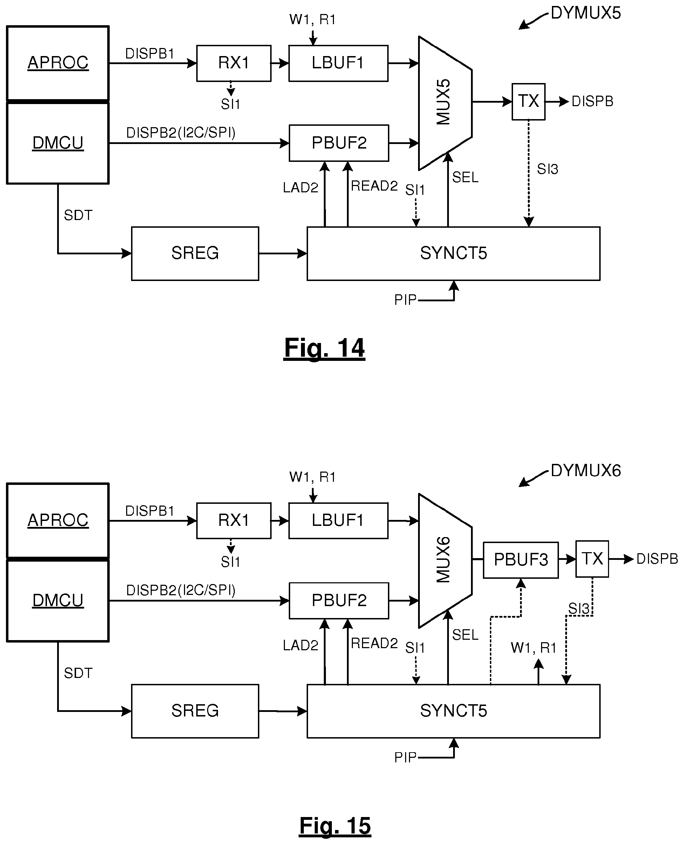

Le multiplexeur dynamique DYMUX5 de la figure 14 comprend un multiplexeur matériel MUX5 identique ou de même type que les multiplexeurs MUX3, MUX4, et un circuit de synchronisation SYNCT5. Il diffère principalement du multiplexeur DYMUX4 en ce que le tampon de ligne étendu ELBUF2 est remplacé par un tampon de page PBUF2 dans lequel le contrôleur d'affichage DMCU a préalablement chargé l'intégralité des lignes de la région 10 (Fig.8).

Dans une variante de réalisation montrée sur la figure 15 et applicable également aux modes de réalisation des figures 12 et 13, le multiplexeur dynamique DYMUX6 comprend un multiplexeur MUX6 dont la sortie , au lieu d'être appliquée directement au circuit de transmission TX, est appliquée à un tampon de page PBUF3 qui est préalablement rempli avec la totalité des lignes d'une page avant que son contenu ne soit appliqué au circuit TX pour la génération du signal vidéo sur le bus DISPB. Cette page intégrale préalablement mémorisée peut comprendre des lignes fournies par le processeur d'application et des lignes fournies par le contrôleur d'affichage DMCU, occupant la région 10. Dans ce cas le multiplexeur MUX6 n'est plus du même type que les multiplexeurs précédemment décrit, et bien que toujours désigné ici par l'appellation multiplexeur car il procure le même effet technique, il constitue plutôt un système de copie de tampon à tampon à deux canaux d'entrée et un canal de sortie. Bien que les modes de réalisation du multiplexeur dynamique qui viennent d'être décrits assurent une incrustation des données d'image fournies par l'élément sécurisé avec une finesse d'incrustation, ou pas d'incrustation ("embedding pitch"), qui est à l'échelle d'une ligne des données d'image fournie par le processeur d'application, l'homme de l'art pourra modifier ce pas d'incrustation en fonction des objectifs visés en matière d'ergonomie et d'expérience utilisateur. Dans des modes de réalisation, le pas d'incrustation peut notamment être à l'échelle du pixel des données d'image fournie par le processeur d'application. Dans le mode de réalisation de la figure 14 par exemple, le multiplexeur MUX5 peut être configuré pour sélectionner pixel par pixel les données d'image contenues dans les tampons LBUF1 et PBUF2, et ainsi remplir le tampon de sortie PBUF3 pixel par pixel.

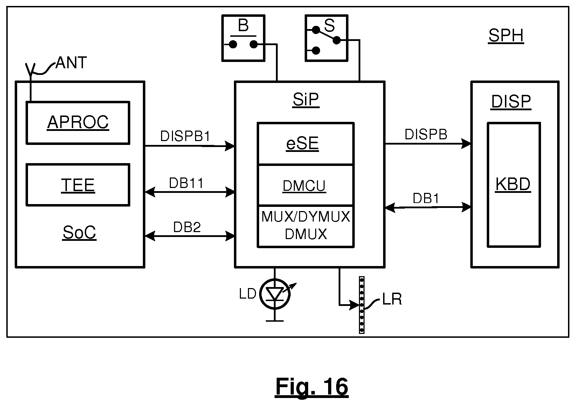

La figure 16 illustre un agencement de composants d'un terminal mobile (smartphone) selon l'une des figures 4 à 8, 10 à 14. Le processeur d'application APROC et son éventuelle enclave TEE peuvent faire partie d'un système-sur-puce SoC ("System-on-Chip"). Le processeur d'application APROC ou le SoC qui le reçoit comporte des broches soudées à des pistes respectives d'un circuit imprimé ou autre support d'interconnexion recevant un certain nombre d'autres composants. Des groupes respectifs de broches sont associés aux différents liens de communication entre les composants, notamment les bus DISPB, DISPB1, DB1, DB2, DB11 précédemment mentionnés.

L'afficheur DISP et la dalle tactile KBD sont généralement déportés et parallèles au circuit imprimé. Leurs bus de commande sont alors reliés au circuit imprimé par des connecteurs soudés sur des pistes du circuit imprimé.

Dans un mode de réalisation, les éléments décrits ci-dessus, permettant de mettre en œuvre un portefeuille matériel embarqué, notamment les éléments eSE, DMCU, MUX ou DYMUX et DMUX, ainsi que les bus qui les relient et éventuellement les connecteurs de tout ou partie des éléments B, S, LD, LR peuvent être intégrés dans un système-en-boîtier SiP ("System-in-Package") conçu pour être monté sur un circuit imprimé. Alternativement, ces éléments peuvent être intégrés dans un autre SoC.

Ainsi, pour intégrer un portefeuille matériel dans un terminal mobile, on aménage une place sur le circuit imprimé pour souder le système-en-boîtier SiP, on redessine les pistes des différents bus utilisés en les interrompant pour qu'elles passent par le SiP, et on prévoit des pistes pour établir la liaison sécurisée entre le processeur APROC et l'élément sécurisé eSE.

Les différents éléments physiques discrets gérés par les circuits du SiP (le bouton B, le commutateur S, l'indicateur lumineux LD) peuvent être fixés sur le boîtier du terminal et reliés à des connecteurs du SiP, ou à des connecteurs déportés sur le circuit imprimé, eux-mêmes reliés par des pistes à des broches dédiées du SiP.

Avec cette configuration, un terminal mobile classique peut être transformé en un terminal mobile incluant un portefeuille matériel embarqué par le simple ajout d'un SiP sur un circuit imprimé portant les composants du terminal classique. Bien que la conception d'un circuit imprimé adapté représente un certain coût de développement et de production, ce coût reste négligeable du fait qu'il n'y a pas d'adaptation à faire au niveau de la plateforme matérielle du terminal classique.

La description qui précède a été effectuée essentiellement dans le contexte des smartphones embarquant un portefeuille matériel pour signer des transactions sur la blockchain ("smartphones blockchain"). Il apparaîtra clairement à l'homme de l'art que les moyens et procédés qui viennent d'être décrits pour assurer le contrôle de l'affichage par l'élément sécurisé pendant la signature d'une transaction s'appliquent à toute opération sécurisée nécessitant ce même contrôle. Les moyens et procédés décrits s'appliquent également à tout type de terminal connecté à Internet ou à un réseau local stockant des secrets servant à diverses utilisations impliquant des calculs cryptographiques, comme la signature de transactions en général et l'authentification, y compris l'authentification "zero knowledge". Dans d'autres types de terminaux connectés, l'interface homme-machine peut être un afficheur associé à un clavier physique, ou à un joystick.

## Revendications

1. Terminal connecté (SPH6) configuré pour exécuter une opération sécurisée, le terminal comprenant :
- un processeur d'application (APROC) configuré pour initier l'opération sécurisée,
- un élément sécurisé (eSE) pour exécuter l'opération sécurisée, et
- un afficheur (DISP) accessible par l'intermédiaire d'un bus câblé (DISPB) et recevant du processeur d'application des données d'image à afficher à l'attention d'un utilisateur,
**caractérisé en ce qu'**il comprend :
- des moyens (DYMUX, MUXi) contrôlés par l'élément sécurisé et configurés pour, à la demande (PIP) de l'élément sécurisé et au moins pendant l'exécution de l'opération sécurisée, appliquer alternativement sur le bus câblé (DISPB) de l'afficheur des données d'image (IPAQ1) fournies par le processeur d'application et des données d'image (IPAQ2) fournies par l'élément sécurisé, de manière à ce que les données d'image fournies par l'élément sécurisé remplacent des données d'image fournies par le processeur d'application et forment une image sécurisée incrustée dans une image non sécurisée fournie par le processeur d'application, l'image sécurisée s'étendant dans au moins une région (10) déterminée de l'afficheur, et
- des moyens (VM, LR, 101, 102, 103) contrôlés par l'élément sécurisé pour indiquer à l'utilisateur l'emplacement et l'étendue de la région (10) dans laquelle est affichée l'image sécurisée incrustée.

2. Terminal selon la revendication 1, comprenant au moins un indicateur lumineux (LD, LR) activé par l'élément sécurisé lorsque l'élément sécurisé incruste une image sécurisée dans une image non sécurisée fournie par le processeur d'application.

3. Terminal selon l'une des revendications 1 et 2, dans lequel les moyens pour indiquer l'emplacement et l'étendue de la région (10) dans laquelle est affichée l'image sécurisée incrustée comprennent une rangée (LR) d'indicateurs lumineux (Lᵢ) contrôlée par l'élément sécurisé et agencée en bordure de l'afficheur.

4. Terminal selon l'une des revendications 1 et 2, dans lequel les moyens pour indiquer l'emplacement, de la région (10) dans laquelle est affichée l'image sécurisée incrustée comprennent :
- une région (101) de l'afficheur (LR) qui est en permanence sous le contrôle de l'élément sécurisé, et qui affiche une apparence déterminée,
- une bordure (102) de la région (10) dans laquelle est affichée l'image sécurisée incrustée, qui présente la même apparence que la région (101) de l'afficheur qui est en permanence sous le contrôle de l'élément sécurisé.

5. Terminal selon l'une des revendications 1 à 4, dans lequel les moyens (DYMUX, MUXi) configurés pour appliquer alternativement sur le bus câblé (DISPB) de l'afficheur des données d'image (IPAQ1) fournies par le processeur d'application et des données d'image (IPAQ2) fournies par l'élément sécurisé, comprennent :
- un multiplexeur (MUXi, MUX1-MUX5) recevant sur une première entrée les données d'image (IPAQ1) fournies par le processeur d'application et sur une seconde entrée les données d'image (IPAQ2) fournies par l'élément sécurisé, et
- un circuit de commande (SYNCT, SYNCT1-SYNCT5, SREG, DMCU) du multiplexeur, configuré pour commander (SEL) le multiplexeur en fonction d'une donnée de configuration (SDT) fournie par l'élément sécurisé.

6. Terminal selon la revendication 5, dans lequel le circuit de commande (SYNCT, SYNCT1-SYNCT5, SREG, DMCU) est configuré pour commander le multiplexeur avec une finesse d'incrustation déterminée des données d'image fournies par l'élément sécurisé, ladite finesse d'incrustation étant à l'échelle d'une ligne ou à l'échelle d'un pixel des données d'image fournies par le processeur d'application.

7. Terminal selon l'une des revendications 1 à 6, dans lequel l'élément sécurisé est configuré pour, avant de réaliser l'opération, incruster dans une image non sécurisée fournie par le processeur d'application une image sécurisée comprenant des informations sur l'opération sécurisée.

8. Terminal selon l'une des revendications 1 à 7, comprenant en outre un dispositif de saisie (KBD) fournissant des données tactiles sur un bus de données (DB1), et un démultiplexeur (DMUX) commandé par l'élément sécurisé (eSE) et configuré pour relier le bus de données (DB1) du dispositif de saisie à un bus (DB11) du processeur d'application ou à un bus (DB12) de l'élément sécurisé.

9. Terminal selon les revendications 7 et 8, dans lequel l'élément sécurisé est configuré pour se relier au dispositif de saisie (KBD) pendant l'affichage d'informations sur l'opération dans l'image sécurisée.

10. Terminal selon l'une des revendications 1 à 9, comprenant un bouton physique (B, S) actionnable par l'utilisateur et surveillé par l'élément sécurisé (eSE), dans lequel l'élément sécurisé est configuré pour ne pas réaliser l'opération en l'absence d'une action de l'utilisateur sur le bouton physique (B, S).

11. Terminal selon l'une des revendications 1 à 10, dans lequel l'élément sécurisé (eSE) et les moyens (DYMUX, MUXi) pour appliquer alternativement sur le bus câblé (DISPB) de l'afficheur des données d'image (IPAQ1) fournies par le processeur d'application et des données d'image (IPAQ2) fournies par l'élément sécurisé, sont intégrés en tout ou en partie dans un système-en-boîtier (SiP) ou dans un système-sur-puce (Soc) monté sur un support d'interconnexion du terminal.

12. Terminal selon l'une des revendications 1 à 11, dans lequel l'opération sécurisée comprend une étape de signature d'une donnée au moyen d'une clé secrète.

13. Terminal selon l'une des revendications 1 à 12, ne comprenant aucun contrôleur d'affichage entre l'afficheur et les moyens (DYMUX, MUXi) contrôlés par l'élément sécurisé, les données d'image appliquées alternativement sur le bus câblé (DISPB) de l'afficheur par les moyens (DYMUX, MUXi) contrôlés par l'élément sécurisé étant dans un format (MIPI DSI) compatible avec l'afficheur et ne nécessitant pas, pour être affichées, d'être converties dans un autre format.

14. Procédé pour conduire une opération sécurisée au moyen d'un terminal connecté (SPH6), notamment la signature d'une donnée au moyen d'une clé secrète, le terminal comprenant :
- un processeur d'application (APROC) configuré pour initier l'opération sécurisée,
- un élément sécurisé (eSE) détenant une clé privée et configuré pour exécuter l'opération sécurisée, et
- un afficheur (DISP) accessible par l'intermédiaire d'un bus câblé (DISPB) et recevant du processeur d'application des images non sécurisées relatives au déroulement de l'opération sécurisée,
procédé **caractérisé en ce qu'**il comprend :
- une étape consistant à prévoir des moyens (DYMUX, MUXi) contrôlés par l'élément sécurisé et configurés pour, à la demande (PIP) de l'élément sécurisé, appliquer alternativement sur le bus câblé (DISPB) de l'afficheur des données d'image (IPAQ1) fournies par le processeur d'application et des données d'image (IPAQ2) fournies par l'élément sécurisé, de manière à ce que les données d'image fournies par l'élément sécurisé remplacent des données d'image fournies par le processeur d'application et forment ladite image sécurisée incrustée dans l'image non sécurisée fournie par le processeur d'application,
- une étape consistant à incruster, dans au moins une image non sécurisée fournie par le processeur d'application et présentée sur l'afficheur, une image sécurisée fournie par l'élément sécurisé et non accessible au processeur d'application, l'image sécurisée comprenant des informations sur l'opération et s'étendant dans au moins une région (10) déterminée de l'afficheur, l'étape d'incrustation étant sous le contrôle de l'élément sécurisé et ne pouvant pas être empêchée ou corrompue par le processeur d'application, et
- une étape sous le contrôle de l'élément sécurisé, consistant à indiquer à l'utilisateur l'emplacement et l'étendue de la région (10) dans laquelle est affichée l'image sécurisée incrustée, ladite étape mettant en œuvre des moyens (VM, LR, 101, 102, 103) contrôlés par l'élément sécurisé.

15. Procédé selon la revendication 14, dans lequel on applique alternativement sur le bus câblé (DISPB) de l'afficheur des données d'image dans un format (MIPI DSI) compatible avec l'afficheur et ne nécessitant pas, pour être affichées, d'être converties dans un autre format, et l'on ne prévoit aucun contrôleur d'affichage entre l'afficheur et les moyens (DYMUX, MUXi) contrôlés par l'élément sécurisé.

16. Procédé selon l'une des revendications 14 et 15, comprenant la prévision dans le terminal d'au moins un indicateur lumineux (LD, LR), et comprenant une étape d'activation de l'indicateur lumineux par l'élément sécurisé lorsque l'élément sécurisé incruste une image sécurisée dans une image non sécurisée fournie par le processeur d'application.

17. Procédé selon l'une des revendications 14 à 16, dans lequel l'emplacement et l'étendue de la région (10) dans laquelle est affichée l'image sécurisée incrustée sont indiqués au moyen d'une rangée (LR) d'indicateurs lumineux (Lᵢ) contrôlée par l'élément sécurisé et agencée en bordure de l'afficheur.

18. Procédé selon l'une des revendications 14 à 17, dans lequel l'emplacement et l'étendue de la région (10) dans laquelle est affichée l'image sécurisée incrustée sont indiqués au moyen :
- d'une région (101) de l'afficheur (LR) qui est en permanence sous le contrôle de l'élément sécurisé et qui présente une apparence déterminée, et
- d'une bordure (102) de la région (10) dans laquelle est affichée l'image sécurisée incrustée, qui présente la même apparence que la région (101) de l'afficheur en permanence sous le contrôle de l'élément sécurisé.

19. Procédé selon l'une des revendications 14 à 18, dans lequel le dispositif comprend un dispositif de saisie (KBD) fournissant des données tactiles sur un bus de données (DB1), et comprenant l'étape consistant à relier le dispositif de saisie (KBD) à l'élément sécurisé pendant l'affichage d'informations sur l'opération sécurisée dans l'image sécurisée incrustée.

20. Procédé selon l'une des revendications 14 à 19, dans lequel le dispositif comprend un bouton physique (B, S) actionnable par l'utilisateur et surveillé par l'élément sécurisé (eSE), et comprenant une étape consistant à configurer l'élément sécurisé de manière à ce qu'il n'exécute pas l'opération sécurisée en l'absence d'une action de l'utilisateur sur le bouton physique (B, S).

## Patentansprüche

1. Verbundenes Endgerät (SPH6), konfiguriert, um einen sicheren Vorgang auszuführen, das Endgerät umfassend:
- einen Anwendungsprozessor (APROC), der konfiguriert ist, um den sicheren Vorgang zu initiieren,
- ein Secure Element (eSE) zum Ausführen des sicheren Vorgangs, und
- ein Anzeigegerät (DISP), das über einen drahtgebundenen Bus (DISPB) zugänglich ist und von dem Anwendungsprozessor für einen Benutzter anzuzeigende Bilddaten empfängt,
**dadurch gekennzeichnet, dass** es umfasst:
- Mittel (DYMUX, MUXi), die durch das Secure Element gesteuert werden und konfiguriert sind, um auf Anforderung (PIP) des Secure Element und mindestens während der Ausführung des sicheren Vorgangs abwechselnd von dem Anwendungsprozessor bereitgestellte Bilddaten (IPAQ1) und von dem Secure Element bereitgestellte Bilddaten (IPAQ2) an den verdrahteten Bus (DISPB) des Anzeigegeräts so anzulegen, dass die von dem Secure Element bereitgestellten Bilddaten die von dem Anwendungsprozessor bereitgestellten Bilddaten ersetzen und ein sicheres Bild bilden, das in ein von dem Anwendungsprozessor bereitgestelltes unsicheres Bild eingebettet wird, wobei sich das sichere Bild in mindestens einen bestimmten Bereich (10) der Anzeige erstreckt, und
- Mittel (VM, LR, 101, 102, 103), die durch das Secure Element gesteuert werden, um dem Benutzer die Position und die Ausdehnung des Bereichs (10) anzugeben, in dem das eingebettete sichere Bild angezeigt wird.

2. Endgerät nach Anspruch 1, umfassend mindestens eine Leuchtanzeige (LD, LR), die durch das Secure Element aktiviert wird, wenn das Secure Element ein sicheres Bild in ein durch den Anwendungsprozessor bereitgestelltes unsicheres Bild einbettet.

3. Endgerät nach einem der Ansprüche 1 und 2, wobei die Mittel zum Angeben der Position und der Ausdehnung des Bereichs (10), in dem das eingebettete sichere Bild angezeigt wird, eine Reihe (LR) von Leuchtanzeigen (Lᵢ) umfassen, die durch das Secure Element gesteuert werden und am Rand des Anzeigegeräts angeordnet sind.

4. Endgerät nach einem der Ansprüche 1 und 2, wobei die Mittel zum Angeben der Position des Bereichs (10), in dem das eingebettete sichere Bild angezeigt wird, umfassen:
- einen Bereich (101) des Anzeigegeräts (LR), der permanent unter der Kontrolle des Secure Element steht und ein bestimmtes Erscheinungsbild anzeigt,
- einen Rand (102) des Bereichs (10), in dem das eingebettete sichere Bild angezeigt wird, der das gleiche Erscheinungsbild aufweist wie der Bereich (101) des Anzeigegeräts, der permanent unter der Kontrolle des Secure Element steht.

5. Endgerät nach einem der Ansprüche 1 bis 4, wobei die Mittel (DYMUX, MUXi) konfiguriert sind, um abwechselnd durch den Anwendungsprozessor bereitgestellte Bilddaten (IPAQ1) und durch das Secure Element bereitgestellte Bilddaten (IPAQ2) an den verdrahteten Bus (DISPB) des Anzeigegeräts anzulegen, umfassend:
- einen Multiplexer (MUXi, MUX1-MUX5), der an einem ersten Eingang die von dem Anwendungsprozessor bereitgestellten Bilddaten (IPAQ1) und an einem zweiten Eingang die von dem Secure Element bereitgestellten Bilddaten (IPAQ2) empfängt, und
- eine Steuerschaltung (SYNCT, SYNCT1-SYNCT5, SREG, DMCU) des Multiplexers, die konfiguriert ist, um den Multiplexer in Abhängigkeit von einem von dem Secure Element bereitgestellten Konfigurationsdatenelement (SDT) zu steuern (SEL).

6. Endgerät nach Anspruch 5, wobei die Steuerschaltung (SYNCT, SYNCT1-SYNCT5, SREG, DMCU) konfiguriert ist, um den Multiplexer mit einer bestimmten Einbettungsauflösung der durch das Secure Element bereitgestellten Bilddaten zu steuern, wobei die Einbettungsauflösung auf der Ebene einer Zeile oder auf der Ebene eines Pixels der durch den Anwendungsprozessor bereitgestellten Bilddaten liegt.

7. Endgerät nach einem der Ansprüche 1 bis 6, wobei das Secure Element konfiguriert ist, um vor dem Ausführen des Vorgangs, in ein unsicheres Bild, das von dem Anwendungsprozessor bereitgestellt wird, ein sicheres Bild einzubetten, das Informationen über den sicheren Vorgang umfasst.

8. Endgerät nach einem der Ansprüche 1 bis 7, ferner umfassend eine Eingabevorrichtung (KBD), die taktile Daten auf einem Datenbus (DB1) bereitstellt, und einen Demultiplexer (DMUX), der durch das Secure Element (eSE) gesteuert wird und konfiguriert ist, um den Datenbus (DB1) der Eingabevorrichtung mit einem Bus (DB11) des Anwendungsprozessors oder mit einem Bus (DB12) des Secure Element zu verbinden.

9. Endgerät nach Anspruch 7 und 8, wobei das Secure Element konfiguriert ist, um sich während der Anzeige von Informationen über den Vorgang in dem sicheren Bild mit der Eingabevorrichtung (KBD) zu verbinden.

10. Endgerät nach einem der Ansprüche 1 bis 9, umfassend eine physische Taste (B, S), die durch den Benutzer betätigbar ist und durch das Secure Element (eSE) überwacht wird, wobei das Secure Element konfiguriert ist, um den Vorgang bei Fehlen einer Handlung des Benutzers auf der physischen Taste (B, S) nicht auszuführen.

11. Endgerät nach einem der Ansprüche 1 bis 10, wobei das Secure Element (eSE) und die Mittel (DYMUX, MUXi) zum abwechselnden Anlegen von durch den Anwendungsprozessor bereitgestellten Bilddaten (IPAQ1) und von durch das Secure Element bereitgestellten Bilddaten (IPAQ2) an den verdrahteten Bus (DISPB) des Anzeigegeräts ganz oder teilweise in einem System-in-Package (SiP) oder in einem System-on-a-Chip (SoC) integriert sind, das auf einem Verbindungsträger des Endgeräts angebracht ist.

12. Endgerät nach einem der Ansprüche 1 bis 11, wobei der sichere Vorgang einen Schritt des Signierens eines Datenelements mittels eines geheimen Schlüssels umfasst.

13. Endgerät nach einem der Ansprüche 1 bis 12, nicht umfassend eine Anzeigesteuerung zwischen dem Anzeigegerät und den durch das Secure Element gesteuerten Mitteln (DYMUX, MUXi), wobei die Bilddaten, die durch die durch das Secure Element gesteuerten Mittel (DYMUX, MUXi) abwechselnd an den verdrahteten Bus (DISPB) des Anzeigegeräts angelegt werden, in einem mit dem Anzeigegerät kompatiblen Format (MIPI DSI) vorliegen und zum Anzeigen nicht in ein anderes Format umgewandelt werden müssen.

14. Verfahren zum Durchführen eines sicheren Vorgangs mittels eines verbundenen Endgeräts (SPH6), insbesondere der Signatur eines Datenelements mittels eines geheimen Schlüssels, wobei das Endgerät umfasst:
- einen Anwendungsprozessor (APROC), der konfiguriert ist, um den sicheren Vorgang zu initiieren,
- ein Secure Element (eSE), das einen privaten Schlüssel hält und konfiguriert ist, um den sicheren Vorgang auszuführen, und
- ein Anzeigegerät (DISP), das über einen verdrahteten Bus (DISPB) zugänglich ist und von dem Anwendungsprozessor unsichere Bilder in Bezug auf den Ablauf des sicheren Vorgangs empfängt,
Verfahren, **dadurch gekennzeichnet, dass** es umfasst:
- einen Schritt des Vorsehens von Mitteln (DYMUX, MUXi), die durch das Secure Element gesteuert werden und konfiguriert sind, um auf Anforderung (PIP) des Secure Element abwechselnd von dem Anwendungsprozessor bereitgestellte Bilddaten (IPAQ1) und von dem Secure Element bereitgestellte Bilddaten (IPAQ2) an den verdrahteten Bus (DISPB) des Anzeigegeräts so anzulegen, dass die von dem Secure Element bereitgestellten Bilddaten die von dem Anwendungsprozessor bereitgestellten Bilddaten ersetzen und das sichere Bild bilden, das in das von dem Anwendungsprozessor bereitgestellte unsichere Bild eingebettet wird,
- einen Schritt des Einbettens, in mindestens ein durch den Anwendungsprozessor bereitgestelltes unsicheres Bild, das auf dem Anzeigegerät dargestellt wird, eines durch das Secure Element bereitgestellten sicheren Bildes, das für den Anwendungsprozessor nicht zugänglich ist, wobei das sichere Bild Informationen über den Vorgang umfasst und sich in mindestens einen bestimmten Bereich (10) des Anzeigegeräts erstreckt, wobei der Schritt des Einbettens unter der Kontrolle des Secure Element steht und durch den Anwendungsprozessor nicht verhindert oder korrumpiert werden kann, und
- einen Schritt des Anzeigens an einen Benutzer, unter der Kontrolle des Secure Element, der Position und der Ausdehnung des Bereichs (10), in dem das eingebettete sichere Bild angezeigt wird, wobei der Schritt Mittel (VM, LR, 101, 102, 103) implementiert, die durch das Secure Element gesteuert werden.

15. Verfahren nach Anspruch 14, wobei abwechselnd an den verdrahteten Bus (DISPB) des Anzeigegeräts Bilddaten in einem mit dem Anzeigegerät kompatiblen Format (MIPI DSI) angelegt werden, die zum Anzeigen nicht in ein anderes Format umgewandelt werden müssen, und keine Anzeigesteuerung zwischen dem Anzeigegerät und den durch das Secure Element gesteuerten Mitteln (DYMUX, MUXi) vorgesehen ist.

16. Verfahren nach einem der Ansprüche 14 und 15, umfassend das Vorsehen von mindestens einer Leuchtanzeige (LD, LR) in dem Endgerät, und umfassend einen Schritt des Aktivierens der Leuchtanzeige durch das Secure Element, wenn das Secure Element ein sicheres Bild in ein unsicheres Bild einbettet, das von dem Anwendungsprozessor bereitgestellt wird.

17. Verfahren nach einem der Ansprüche 14 bis 16, wobei die Position und die Ausdehnung des Bereichs (10), in dem das eingebettete sichere Bild angezeigt wird, mittels einer Reihe (LR) von Leuchtanzeigen (Lᵢ) angegeben werden, die durch das Secure Element gesteuert werden und an dem Rand des Anzeigegeräts angeordnet sind.

18. Verfahren nach einem der Ansprüche 14 bis 17, wobei die Position und die Ausdehnung des Bereichs (10), in dem das eingebettete sichere Bild angezeigt wird, angegeben werden mittels:
- eines Bereichs (101) des Anzeigegeräts (LR), der permanent unter der Kontrolle des Secure Element steht und ein bestimmtes Erscheinungsbild aufweist, und
- einem Rand (102) des Bereichs (10), in dem das eingebettete sichere Bild angezeigt wird, der das gleiche Erscheinungsbild aufweist wie der permanent unter der Kontrolle des Secure Element stehende Bereich (101) der Anzeige.

19. Verfahren nach einem der Ansprüche 14 bis 18, wobei die Vorrichtung eine Eingabevorrichtung (KBD) umfasst, die taktile Daten auf einem Datenbus (DB1) bereitstellt, und umfassend den Schritt des Verbindens der Eingabevorrichtung (KBD) mit dem Secure Element während der Anzeige von Informationen über den sicheren Vorgang in dem eingebetteten sicheren Bild.

20. Verfahren nach einem der Ansprüche 14 bis 19, wobei die Vorrichtung eine physische Taste (B, S) umfasst, die durch den Benutzer betätigbar ist und durch das Secure Element (eSE) überwacht wird, und umfassend einen Schritt des Konfigurierens des Secure Element, so dass es den sicheren Vorgang bei Fehlen einer Handlung des Benutzers auf der physischen Taste (B, S) nicht ausführt.

## Claims

1. A connected terminal (SPH6) configured to execute a secure operation, the terminal comprising:
- an application processor (APROC) configured to initiate the secure operation,
- a secure element (eSE) for executing the secure operation, and
- a display (DISP) accessible via a wired bus (DISPB) and receiving from the application processor image data to be displayed to a user,
**characterized in that** it comprises:
- means (DYMUX, MUXi) controlled by the secure element and configured to, at the request (PIP) of the secure element and at least during the execution of the secure operation, alternately apply to the wired bus (DISPB) of the display image data (IPAQ1) provided by the application processor and image data (IPAQ2) provided by the secure element, such that the image data provided by the secure element replace image data provided by the application processor and form a secure image embedded in a non-secure image provided by the application processor, the secure image extending in at least one determined region (10) of the display, and
- means (VM, LR, 101, 102, 103) controlled by the secure element for indicating to the user the location and extent of the region (10) in which the embedded secure image is displayed.

2. The terminal according to claim 1, comprising at least one light indicator (LD, LR) activated by the secure element when the secure element embeds a secure image in a non-secure image provided by the application processor.

3. The terminal according to one of claims 1 and 2, wherein the means for indicating the location and extent of the region (10) in which the embedded secure image is displayed comprise a row (LR) of light indicators (Li) controlled by the secure element and arranged along the edge of the display.

4. The terminal according to one of claims 1 and 2, wherein the means for indicating the location of the region (10) in which the embedded secure image is displayed comprise:
- a region (101) of the display (LR) that is permanently under the control of the secure element, and that displays a determined appearance,
- a border (102) of the region (10) in which the embedded secure image is displayed, which has the same appearance as the region (101) of the display that is permanently under the control of the secure element.

5. The terminal according to one of claims 1 to 4, wherein the means (DYMUX, MUXi) configured to alternately apply to the wired bus (DISPB) of the display image data (IPAQ1) provided by the application processor and image data (IPAQ2) provided by the secure element, comprise:
- a multiplexer (MUXi, MUX1-MUX5) receiving on a first input the image data (IPAQ1) provided by the application processor and on a second input the image data (IPAQ2) provided by the secure element, and
- a control circuit (SYNCT, SYNCT1-SYNCT5, SREG, DMCU) of the multiplexer, configured to control (SEL) the multiplexer according to a configuration data (SDT) provided by the secure element.

6. The terminal according to claim 5, wherein the control circuit (SYNCT, SYNCT1-SYNCT5, SREG, DMCU) is configured to control the multiplexer with a determined embedding granularity of the image data provided by the secure element, said embedding granularity being at the scale of a line or at the scale of a pixel of the image data provided by the application processor.

7. The terminal according to one of claims 1 to 6, wherein the secure element is configured to, before performing the operation, embed in a non-secure image provided by the application processor a secure image comprising information about the secure operation.

8. The terminal according to one of claims 1 to 7, further comprising an input device (KBD) providing touch data on a data bus (DB1), and a demultiplexer (DMUX) controlled by the secure element (eSE) and configured to connect the data bus (DB1) of the input device to a bus (DB11) of the application processor or to a bus (DB12) of the secure element.

9. The terminal according to claims 7 and 8, wherein the secure element is configured to connect to the input device (KBD) during the display of information about the operation in the secure image.

10. The terminal according to one of claims 1 to 9, comprising a physical button (B, S) actionable by the user and monitored by the secure element (eSE), wherein the secure element is configured to bypass the operation in the absence of a user action on the physical button (B, S).

11. The terminal according to one of claims 1 to 10, wherein the secure element (eSE) and the means (DYMUX, MUXi) for alternately applying to the wired bus (DISPB) of the display image data (IPAQ1) provided by the application processor and image data (IPAQ2) provided by the secure element, are integrated wholly or partially in a system-in-package (SiP) or in a system-on-chip (SoC) mounted on an interconnection support of the terminal.

12. The terminal according to one of claims 1 to 11, wherein the secure operation comprises a step of signing data using a secret key.

13. The terminal according to one of claims 1 to 12, devoid of any display controller between the display and the means (DYMUX, MUXi) controlled by the secure element, the image data alternately applied to the wired bus (DISPB) of the display by the means (DYMUX, MUXi) controlled by the secure element being in a format (MIPI DSI) compatible with the display and not requiring, to be displayed, to be converted into another format.

14. A method for conducting a secure operation using a connected terminal (SPH6), in particular the signing of data using a secret key, the terminal comprising:
- an application processor (APROC) configured to initiate the secure operation,
- a secure element (eSE) holding a private key and configured to execute the secure operation, and
- a display (DISP) accessible via a wired bus (DISPB) and receiving from the application processor non-secure images related to the progress of the secure operation,
method **characterized in that** it comprises:
- a step of providing means (DYMUX, MUXi) controlled by the secure element and configured to, at the request (PIP) of the secure element, alternately apply to the wired bus (DISPB) of the display image data (IPAQ1) provided by the application processor and image data (IPAQ2) provided by the secure element, such that the image data provided by the secure element replace image data provided by the application processor and form said secure image embedded in the non-secure image provided by the application processor,
- a step of embedding, in at least one non-secure image provided by the application processor and presented on the display, a secure image provided by the secure element and inaccessible to the application processor, the secure image comprising information about the operation and extending in at least one determined region (10) of the display, the embedding step being under the control of the secure element and unable to be prevented or corrupted by the application processor, and
- a step under the control of the secure element, of indicating to the user the location and extent of the region (10) in which the embedded secure image is displayed, said step implementing means (VM, LR, 101, 102, 103) controlled by the secure element.

15. The method according to claim 14, wherein image data in a format (MIPI DSI) compatible with the display and not requiring, to be displayed, to be converted into another format are alternately applied to the wired bus (DISPB) of the display, and no display controller is provided between the display and the means (DYMUX, MUXi) controlled by the secure element.

16. The method according to one of claims 14 and 15, comprising providing in the terminal at least one light indicator (LD, LR), and comprising a step of activating the light indicator by the secure element when the secure element embeds a secure image in a non-secure image provided by the application processor.

17. The method according to one of claims 14 to 16, wherein the location and extent of the region (10) in which the embedded secure image is displayed are indicated by means of a row (LR) of light indicators (Li) controlled by the secure element and arranged along the edge of the display.

18. The method according to one of claims 14 to 17, wherein the location and extent of the region (10) in which the embedded secure image is displayed are indicated by means of:
- a region (101) of the display (LR) that is permanently under the control of the secure element and that has a determined appearance, and
- a border (102) of the region (10) in which the embedded secure image is displayed, which has the same appearance as the region (101) of the display permanently under the control of the secure element.

19. The method according to one of claims 14 to 18, wherein the device comprises an input device (KBD) providing touch data on a data bus (DB1), and comprising the step of connecting the input device (KBD) to the secure element during the display of information about the secure operation in the embedded secure image.

20. The method according to one of claims 14 to 19, wherein the device comprises a physical button (B, S) actionable by the user and monitored by the secure element (eSE), and comprising a step of configuring the secure element such that it bypasses execution of the secure operation in the absence of a user action on the physical button (B, S).
